(19) Europäisches Patentamt
European Patent Office
Office européen des brevets

(11) **EP 2 299 318 A2**

(12) **EUROPEAN PATENT APPLICATION**

(43) Date of publication:
**23.03.2011 Bulletin 2011/12**

(51) Int Cl.:
***G02F 1/167*** *(2006.01)*

(21) Application number: **10075698.0**

(22) Date of filing: **17.04.2003**

(84) Designated Contracting States:
**DE FR**

(30) Priority: **17.04.2002 JP 2002114586**
**17.04.2002 JP 2002114668**
**02.05.2002 JP 2002130411**
**02.05.2002 JP 2002130510**
**31.05.2002 JP 2002158781**
**29.10.2002 JP 2002313955**
**29.10.2002 JP 2002313817**

(62) Document number(s) of the earlier application(s) in accordance with Art. 76 EPC:
**03719125.1 / 1 501 194**

(71) Applicant: **Bridgestone Corporation**
**Tokyo 104-8340 (JP)**

(72) Inventors:
• **Nihei, Norio**
**Kodaira-shi**
**Tokyo 187-0031 (JP)**
• **Kitano, Hajime**
**Kodaira-shi**
**Tokyo 187-0031 (JP)**
• **Takagi, Koji**
**Kawasaki-shi**
**Kanagawa 211-0051 (JP)**
• **Murata, Kazuya**
**Kodaira-shi**
**Tokyo 187-0031 (JP)**

• **Masuda, Yoshitomo**
**Hamura-shi**
**Tokyo 205-0023 (JP)**
• **Hattori, Reiji**
**Fukuoka-shi**
**Fukuoka 819-0002 (JP)**
• **Iwabuchi, Yoshinori**
**Kodaira-shi**
**Tokyo 187-0031 (JP)**
• **Yakushiji, Gaku**
**Higashiyamato-shi**
**Tokyo 207-0022 (JP)**
• **Sakurai, Ryou**
**Kodaira-shi**
**Tokyo 187-0031 (JP)**
• **Yamazaki, Hirotaka**
**Kunitachi-shi**
**Tokyo 186-0005 (JP)**

(74) Representative: **Oxley, Robin John George**
**Marks & Clerk LLP**
**90 Long Acre**
**London**
**WC2E 9RA (GB)**

Remarks:
This application was filed on 01-10-2010 as a divisional application to the application mentioned under INID code 62.

(54) **Surface texture parameters (Ra, Sm) of a substrate in a dry-toner type coloured particle display**

(57) A dry-toner type coloured particle display (fig. 13) is disclosed. In the image display panel, two or more groups of particles (103) having different colours and different charging characteristics are sealed in the space between two substrates (101,102), at least one of which is transparent. The particles move through the space in response to an applied electrostatic field produced by a pair of electrodes arranged on the substrates in order to display an image. Surface texture parameters $R_a$ (average roughness) and $S_m$ (usually an average peak to peak distance between neighbouring asperities on a surface) of the bounding substrates lie within specified ranges, defined relative to the particle size, in order to weaken attractive forces between the particles and the surface of the respective substrate. These attractive forces can be adhesion forces such as intermolecular and electrostatic image charge forces (as well as others), and are reduced by decreasing the effective particle to substrate contact area. As a result, the particles are more easily removed and the display driving voltage is reduced.

Further display arrangements include the provision of bumps, dips or micro-cutouts on part of a substrate electrode to create a lateral electric field component, which again weakens attractive forces between the particles and the substrate electrode. Additionally, there is an arrangement disclosed in which an insulating member hav-

ing a volume resistivity ρ of not less than 1 x 10$^{12}$ Ω.cm is coated thinly on to the surface of the substrate with which the particles are in contact in order to prevent leak-

due to the particles when these are moved inside a pixel.

age of charge away from the particles to the substrate. Finally, there is an arrangement in which the display state of the image can be read-out by detecting the current

## FIG. 13

**Description**

TECHNICAL FIELD

The present invention relates to an image display device, which comprises an image display panel enables to repeatedly display or delete images accompanied by flight and movement of particles utilizing Coulomb's force and so on.

BACKGROUND ART

As an image display device substitutable for liquid crystal display (LCD), image display devices with the use of technology such as an electrophoresis method, an electro-chromic method, a thermal method, dichroic-particles-rotary method are proposed.

As for these image display device, it is conceivable as inexpensive visual display device of the next generation from a merit having wide field of vision close to normal printed matter, having smaller consumption with LCD, spreading out to a display for portable device, and an electronic paper is expected. Recently, electrophoresis method is proposed that microencapsulate dispersion liquid made up with dispersion particles and coloration solution and dispose the liquid between faced substrates.

However, in the electrophoresis method, there is a problem that a response speed is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly dissipate charges from the electro-conductive particles, and thus there is a drawback on the lack of stability.

As one method for overcoming the various problems mentioned above, an image display device comprising an image display panel is known, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image by means of Coulomb's force.

Tasks to be solved by a first aspect of the invention including a first embodiment and a second embodiment are as follows. That is, if the image is repeatedly displayed and deleted in the image display device, the particles are moved in parallel to the substrate due to agglutination power and gravity of the particle itself and a rough and dense portion of the particles is generated, so that a defect of the image display and a decrease of the contrast occur. Therefore, an idea is proposed such that a space between the substrates is divided finely by a partition wall so as to form a cell structure and a movement along lateral direction of the particles is inhibited. However, in this method utilizing the partition wall, there is a drawback such that an effective display area decreases and thus the contrast deteriorates. Moreover, there is a drawback such that a particle filling operation into the cell becomes complicated when manufacturing the image display device and further a manufacturing cost of the image display device is increased due to the partition wall production.

Moreover, tasks to be solved by a second aspect of the invention including a first embodiment and a second embodiment are as follows. That is, a dry-type display device has an operation mechanism such that a mixture of two kinds of the particles having different colors and different charge characteristics is sandwiched by electrode plates and an electric field is generated between the electrode plates by applying a voltage to the electrode plates, thereby flying the charged particles having different charge characteristics in a different direction to obtain a display element.

As to forces applied to the particles, there are an attraction force between the particles due to Coulomb's force, an imaging force with respect to the electrode panel, an intermolecular force, a liquid bridging force and a gravity. When the force applying to the particles due to the electric field is larger than total forces mentioned above, the particle fly occurs. Then, respective particles makes a pattern, a contrast is formed due to a color tone difference of the patterns and the pattern is recognized. If the contrast is higher, a display media having an excellent visibility can be obtained.

However, in such a dry-type display device, it is necessary to generate a strong electric field when it is driving. That is, it is necessary to apply over several hundreds V to the particles so as to move them, as compared with an electrophoresis wherein it is possible to move the particles only by several tens V. Therefore, there is a drawback such that general electronic industry materials cannot be used since it is necessary to design an electric circuit, which can endure such a high voltage.

Further, tasks to be solved by a third aspect of the invention are as follows. That is, the image display device mentioned above has a memory property such that, if once the image is formed, the image display state can be maintained even after the applied drive voltage is removed. Therefore, a merit that is not achieved by the known image display device occurs, and an application of a high-definition display with a large-sized screen, an electric paper and so on is expected.

As a method for using more effectively the image display memory property mentioned above, if the maintained image display state can be read-out, it is possible to use the image display device as information storage. Especially, in the case that the number of the display pixels is extremely large like the high-definition display with a large-sized screen, the electric paper and so on, there is a large merit on cost and compact size as compared with a method wherein an image memory method wherein an image memory made of semiconductor elements is used.

Moreover, in a method wherein the image display state is read-out optically by utilizing an optical sensor and so on, there are drawbacks such that a cost is increased since use is made of the optical sensor and such that the image display device is made larger since the optical sensor must be installed. Further, if the image display state can be read-out electrically, it is possible to eliminate the drawbacks mentioned above. However, in the image display device mentioned above wherein the image is displayed by the particle flight and movement, since there is no difference on a resistance or a capacitance between the electrodes during all the image maintaining states after once the image is formed by applying an electric field to the particles, there is a drawback such that it is not possible to read-out the image display state by utilizing the above electric property.

DISCLOSURE OF INVENTION

An object of the first aspect of the invention including the first embodiment and the second embodiment is to provide an image display device having a rapid response in a dry-type device, a simple and inexpensive construction and an excellent stability, which can inhibit an image deterioration due to a particle agglutination during repeated image display operations and can improve a durability.

According to a first embodiment of the first aspect of the invention, an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, is characterized in that micro-concave portions and/or micro-convex portions are provided to a part of or an overall of a surface of the electrode.

Normally, an electric field for flying the particles applied from a pair of electrodes provided respectively on the two substrates arranged in parallel with each other is an even electric field. On the other hand, in the image display device according to the invention, it is possible to introduce a very little uneven electric field partly by the micro-concave portions and/or the micro-convex portions arranged to a surface of the electrode. Since the very little uneven electric field generated by the micro-concave portions and/or the micro-convex portions includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination.

In the image display device of the first embodiment according to the first aspect of the invention, an influence rate for the particles applied from the uneven electric field obtained by the micro-concave portions and/or the micro-convex portions is determined in relation to an average particle size of the particles. Therefore, it is possible to obtain the uneven electric field having a value larger than a predetermined value by defining a relation between the average particle size and a dimension of the micro-concave portions and/or the micro-convex portions. From this viewpoint, it is preferred to construct the micro-concave portions and/or the micro-convex portions in such a manner that the following formulas are satisfied: average width/maximum average particle size > 2; and average height/ maximum average particle size > 2; where a length across corner of a projection shape of the micro-concave portions and/or the micro-convex portions with respect to an electrode surface is assumed to be the average width, an average absolute value of a depth and/or a height of the micro-concave portions and the micro-convex portions is assumed to be the average height (depth), and a largest average particle size among the two or more groups of particles is assumed to be the maximum average particle size. If the above relations are not satisfied, it is not possible to obtain the uneven electric field having a value larger than the predetermined value. Therefore, it is not possible to sufficiently obtain the effects such that the image deterioration due to the particle agglutination during the repeated image display operations can be inhibited and the durability can be improved.

In the image display device of the first embodiment according to the first aspect of the invention, if the micro-concave portions and/or the micro-convex portions are to be arranged to a display electrode that requires an optical transparent property, it is difficult to increase an ITO transparent electrode used normally as a thin film of several tens nm order from the viewpoint of its process and its optical property. Therefore, in this case, it is preferred that a transparent insulation layer is arranged on the electrode and the micro-concave portions and/or the micro-convex portions are arranged thereto so as to obtain the same effects. Moreover, it is possible to print an insulation resin in a dot pattern by utilizing a screen-printing method and so on and to use the dot pattern as the micro-convex portions. In this case, when an occupied area rate of the dot pattern is sufficiently small, use may be made of a resin other than a transparent one.

In the image display device of the first embodiment according to the first aspect of the invention, it is preferred to arrange a plurality of the micro-concave portions and/or the micro-convex portions with a space, because the very little uneven electric field can be applied to a large electrode surface i.e. a large pixel. Accordingly, it is preferred that an average distance between the micro-concave portions and/or the micro-convex portions is constructed to satisfy the formula: average distance / maximum average particle size < 50. In this case, it is possible to obtain the effect of an uneven electric field generation due to the micro-concave portions and/or the micro-convex portions continuously in a wide range.

Moreover, under some circumstances, a slight contrast decrease is sometimes detected at a region to which the micro-concave portions and/or the micro-convex portions are arranged. Therefore, in order to maintain a contrast of the overall display portion, it is preferred that a gross area of projection shapes of the micro-concave portions and/or the micro-convex portions on the electrode surface is not more than 50 % with respect to an area of the electrode. In addition, in order to sufficiently obtain the effect of the micro-concave portions and/or the micro-convex portions, it is preferred that the gross area of the micro-concave portions and the micro-convex portions is not less than 0.1 % with respect to the electrode area.

As the particles used in the image display device of the first embodiment according to the first aspect of the invention, it is preferred to use the particles such that an average particle diameter of the particles is 0.1 to 50 $\mu$m. Moreover, it is preferred to use the particles such that a surface charge density of the particles measured by a carrier and in accordance with a blow-off method is not less than 5 $\mu$C/m$^2$ and not greater than 150 $\mu$C/m$^2$ in an absolute value. Further, it is preferred that the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the Corona discharge. Furthermore, it is preferred that a color of the particles is a white or a black.

According to a second embodiment of the first aspect of the invention, an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, is characterized in that micro-cutout holes are provided to a part of or an overall of a surface of the electrode.

Normally, an electric field for flying the particles applied from a pair of electrodes provided respectively on the two substrates arranged in parallel with each other is an even electric field. On the other hand, in the image display device according to the invention, it is possible to introduce a very little uneven electric field partly by the micro-cutout holes arranged to a surface of the electrode. Since the very little uneven electric field generated by the micro-cutout holes includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination.

In the image display device of the second embodiment according to the first aspect of the invention, an influence rate for the particles applied from the uneven electric field obtained by the micro-cutout holes is determined in relation to an average particle size of the particles. Therefore, it is possible to obtain the uneven electric field having a value larger than a predetermined value by defining a relation between the average particle size of the particles and a dimension of the micro-cutout holes. From this viewpoint, it is preferred to construct the micro-cutout holes in such a manner that the following formula is satisfied: maximum width/maximum average particle size > 10; where a largest length across corner of a shape of the micro-cutout holes is assumed to be the maximum width and a largest average particle size among the two or more groups of particles is assumed to be the maximum average particle size. If the above relation is not satisfied, it is not possible to obtain the uneven electric field having a value larger than the predetermined value. Therefore, it is not possible to sufficiently obtain the effects such that the image deterioration due to the particle agglutination during the repeated image display operations can be inhibited and the durability can be improved.

In the image display device of the second embodiment according to the first aspect of the invention, it is preferred to arrange a plurality of the micro-cutout holes with a space, because the very little uneven electric field can be applied to a large electrode surface i.e. a large pixel. Accordingly, it is preferred that a minimum distance of the micro-cutout holes is constructed to satisfy the formula: minimum distance/maximum average particle size < 50. In this case, it is possible to obtain the effect of an uneven electric field generation due to the micro-cutout holes continuously in a wide range.

Moreover, under some circumstances, a slight contrast decrease is sometimes detected at a region to which the micro-cutout holes are arranged. Therefore, in order to maintain a contrast of the overall display portion, it is preferred that a gross area of the micro-cutout holes on the electrode surface is not more than 50% with respect to an area of the electrode. In addition, in order to sufficiently obtain the effect of the micro-cutout holes, it is preferred that the gross area of the micro-cutout holes is not less than 0.1% with respect to the electrode area.

As the particles used in the image display device of the second embodiment according to the first aspect of the invention, it is preferred to use the particles such that an average particle diameter of the particles is 0.1 to 50 $\mu$m. Moreover, it is preferred to use the particles such that a surface charge density of the particles measured by a carrier and in accordance with a blow-off method is not less than 5 $\mu C/m^2$ and not greater than 150 $\mu C/m^2$ in an absolute value. Further, it is preferred that the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the Corona discharge. Furthermore, it is preferred that a color of the particles is a white or a black.

A first embodiment of the second aspect of the invention is achieved by investigating the above problems and has for its object to provide an image display device having an inexpensive construction and achieving both an improvement of stability and a decrease of drive voltage.

As a result of the inventor's dedicated investigation, in the image display device in which the image is displayed by moving the particles, it is found that the above object can be achieved by coating thinly a surface of the substrate to which the particles are contacted by an insulation member having a volume resistance of not less than $1 \times 10^{12}$ [$\Omega$·cm], and the present invention is realized.

Here, the technical background for achieving the first embodiment of the second invention will be explained.

In an image display method utilizing electrostatic, an electric field is applied between opposed substrates, by means of some kind of means, to which particles are sealed. A particle charged in a low potential is attracted toward a portion of the substrate charged in a high potential by means of Coulomb's force and so on, and a particle charged in high potential is attracted toward a portion of the substrate charged in a low potential by means of Coulomb's force and so on.

An image display can be achieved by moving the particles in a reciprocating manner between the opposed substrates.

Here, it is important as the display unit to design the image display device which can drive the particles by a low voltage.

However, in the known image display device, there remain the following drawbacks if the stability both in the case of particle reciprocating state and particle maintaining state is to be realized, i.e., if a solution that is a main affection is not used, we have no other choice to select an electrostatic display of dry-type having a basic construction of the particles and the substrates, which is represented by a toner-type display. On the other hand, if a drive voltage decreasing is to be realized, we also have no other choice to select an electrostatic display of wet-type having a basic construction of the particles, the substrates and the solution sufficient for a particle migration, which utilizes an electrophoresis migration in the solution. That is, the improvement of the stability both in the reciprocating state and the maintaining state by preventing sedimentation and aggregation and the improvement of the decreasing of the drive voltage are an antinomy, and thus it is difficult to realize these improvements at the same time.

We think that one factor is that an adhesion force between the particle and the substrate in a gas phase is larger than that in a solution phase.

In the first embodiment of the second invention, it is found that the stability improvement during the particle maintaining state and the decrease of the drive voltage can be achieved at the same time by using the substrate to which the insulation member having a volume resistance of not less than $1 \times 10^{12}$ [$\Omega$·cm] is coated thinly.

That is, the first embodiment of the second invention according to the invention provides the following image display device.

(1) An image display device in which particles are sealed between substrates, at least one of the substrates being transparent, and, in which the particles are moved so as to display an image, characterized in that a surface of the substrate to which the particles are contacted is coated thinly by an insulation member having a volume resistance of not less than $1 \times 10^{12}$ [$\Omega$·cm] so as to provide a thin insulation film.

(2) The image display device according to the above (1), wherein a thickness of the thin insulation film is not more than 5 $\mu$m.

(3) The image display device according to the above (1) or (2), wherein the insulation member to be coated on the substrate is the member in which the maximum surface potential, in the case that the surface of the insulation member is charged by a generation of Corona discharge caused by applying a voltage of 8 KV to a Corona discharge device deployed at a distance of 1 mm from the surface, is 300 V or greater at 0.3 second after the Corona discharge.

(4) The image display device according to one of the above (1) - (3), wherein a space in the device is filled with a gas having a relative humidity at 25˚C of not more than 60% RH.

(5) The image display device according to one of the above (1) - (4),
wherein a particle size distribution Span of the particle, which is defined by the following formula, is less than 5:
Span = (d(0.9) - d(0.1))/d(0.5) ; (here, d(0.5) means a value of the particle size expressed by μm wherein an amount of the particles having the particle size larger than or smaller than this value is 50%, d(0.1) means a value of the particle size expressed by μm wherein an amount of the particles having the particle size smaller than this value is 10%, and d(0.9) means a value of the particle size expressed by μm wherein an amount of the particles having the particle size smaller than this value is 90%).
(6) The image display device according to one of the above (1) - (5),
wherein a solvent insoluble rate of the particles, which is defined by the following formula, is not less than 50%:
solvent insoluble rate (%) = (B/A) × 100; (here, A is a weight of the particle before being immersed into the solvent and B is a weight of particles after the particles is immersed into good solvent at 25°C for 24 hours).
(7) The image display device according to one of the above (1) - (6),
wherein the image display device is formed by a plurality of display cells defined by partition walls.
(8) The image display device according to the above (7), wherein the partition wall is formed by one of a screen-printing method, a sandblast method, a photo-conductor paste method and an additive method.
(9) The image display device according to the above (7), wherein the partition wall has a cantilever structure.

A second embodiment of the second aspect of the invention is achieved by investigating the above problems and has for its object to provide an image display device wherein it is not necessary to generate a strong electric field when driving and an electric circuit can be assembled by general-purpose electric materials and wherein it is possible to achieve both an improvement of stability and a decrease of drive voltage.

As a result of the inventor's dedicated investigation, it is found that the above object can be achieved by an image display device in which particles are sealed between substrates, at least one of the substrates being transparent, and, in which the particles are flown and moved so as to display an image, characterized in that an arithmetic average roughness (Ra) and a concave-convex average distance (Sm) of a surface of the substrate, to which the particles are contacted, satisfy the following formulas (1) and (2):

$$d(0.5)/10 \geq Ra \geq d(0.5)/200 \qquad \cdots \cdots \quad (1)$$

$$d(0.5)/10 \geq Sm \geq d(0.5)/1000 \qquad \cdots \cdots \quad (2)$$

(here, d(0.5) means a value of the particle size expressed by μm wherein an amount of the particle material constituting the liquid powder having the particle size larger than this value is 50%).

The second embodiment of the second aspect of the invention is accomplished by the above knowledge.

An object of the third aspect of the invention is to provide an image display device having a rapid response in a dry-type device, a simple and inexpensive construction and an excellent stability, which can read-out an image display state of the displayed image.

According to the third aspect of the invention, an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, is characterized in that an image display state is read-out by detecting a fly/move current produced when the particles are flown and moved in a pixel.

In the image display device according to the third aspect of the invention, a fly/move current flows when flying and moving the particles between the electrodes. An integral value of the fly/move currents is a sum of charges of the particles, which are flown and moved. Therefore, if an amount of the charges of the particles is preliminarily measured, an amount of the moved particles can be understood. In this case, if the amount of the moved particles is divided by an electrode area, a particle density per area can be calculated. Here, an display density may be obtained by optically calculating the particle area density or may be measured actually.

In this manner, if a map indicating a relation between the display density on the electrode area used actually and the integral value of the fly/move currents is preliminarily prepared, it is possible to detect the display density i.e. the image display state by detecting the integral value of the fly/move currents.

In the third aspect of the invention, it is preferred since the present invention can be performed more effectively that the image display state read-out step is performed in such a manner that overall black color image writing or overall white color image writing is performed with respect to the displayed image and a display density of respective pixels is obtained from an integral value of the fly/move current flowing through respective pixels when the image writing step is performed. Moreover, it is preferred that the device further comprises a fly/move current detecting portion for detecting the fly/move current and an integrator for integrating the fly/move current, that the fly/move currrent is detected by utilizing the electrodes used when the image writing step is performed, and that an image re-writing step is performed on the basis of the read-out image display state.

In addition, as the particles used in the image display device according to the invention, it is preferred that an average particle diameter of the particles is 0.1 - 50 $\mu$m. Moreover, it is preferred that a surface charge density of the particles measured by a carrier and in accordance with a blow-off method is not less than 5 $\mu$C/m$^2$ and not greater than 150 $\mu$C/m$^2$ in an absolute value. Further, it is preferred that the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the discharge. Furthermore, it is preferred that a color of the particles is a white or a black. Moreover, it is preferred that the image display panel comprises a matrix electrode having a plurality of scan electrodes and data electrodes arranged substantially parallel thereto.

BRIEF DESCRIPTION OF DRAWINGS

Figs. 1a - 1c are schematic views respectively showing one embodiment of a display element of a image display panel used in an image display device according to a first aspect of the invention and its display driving method.

Figs. 2a - 2h are schematic views respectively explaining one embodiment of micro-concave portions and/or micro-convex portions provided to a surface of an electrode of a first embodiment according to the first aspect of the invention.

Fig. 3 is a schematic view illustrating one embodiment in which the present invention is applied to a segment display device of the first embodiment according to the first aspect of the invention.

Fig. 4 is a schematic view depicting one embodiment of an opposed substrate of the segment display device of the first embodiment according to the first aspect of the invention.

Fig. 5 is a schematic view showing one embodiment of a transparent electrode of the segment display device of the first embodiment according to the first aspect of the invention.

Fig. 6 is a schematic view illustrating one embodiment of a screen pattern (resist pattern) of the segment display device of the first embodiment according to the first aspect of the invention.

Figs. 7a - 7g are schematic views respectively explaining one embodiment of micro-cutout holes formed by cutting out the surface of the electrode of a second embodiment according to the first aspect of the invention.

Fig. 8 is a schematic view depicting one embodiment in which the present invention is applied to a segment display device of the second embodiment according to the first aspect of the invention.

Fig. 9 is a schematic view showing another embodiment in which the present invention is applied to a segment display device of the second embodiment according to the first aspect of the invention.

Fig. 10 is a schematic view illustrating a measuring method of a particle surface potential.

Fig. 11 is a schematic view explaining one embodiment of a display method of an image display device according to a second aspect of the invention.

Fig. 12 is a schematic view explaining another embodiment of the display method of the image display device according to the second aspect of the invention.

Fig. 13 is a schematic view explaining one embodiment of the image display device according to the second aspect of the invention.

Fig. 14 is a schematic view depicting one embodiment of a substrate shape of the image display device according to the second aspect of the invention.

Fig. 15 is a schematic view explaining respective steps when a partition wall is formed by a screen-printing method in the image display device according to the second aspect of the invention.

Fig. 16 is a schematic view explaining respective steps when the partition wall is formed by a sandblast method in the image display device according to the second aspect of the invention.

Fig. 17 is a schematic view explaining respective steps when the partition wall is formed by a photo-conductor paste method in the image display device according to the second aspect of the invention.

Fig. 18 is a schematic view explaining respective steps when the partition wall is formed by an additive method in the image display device according to the second aspect of the invention.

Figs. 19a - 19c are schematic views respectively showing one embodiment of a display element of a image display panel used in an image display device according to a third aspect of the invention and its display driving method.

Figs. 20a and 20b are schematic views respectively illustrating one embodiment of the image display panel of the image display device according to the third aspect of the invention.

Figs. 21a and 21b are schematic views respectively explaining a method of correcting a fly/move current when a halftone image display is performed in the image display device according to the third aspect of the invention.

Fig. 22 is a schematic view explaining an image read-out operation of the image display device according to the third aspect of the invention.

Fig. 23 is a schematic view explaining a method of applying a reset voltage for a particle state reset operation prior to a halftone image display in the image display device according to the third aspect of the invention.

## BEST MODE FOR CARRYING OUT THE INVENTION

At first, an image display device according to a first aspect of the invention will be explained.

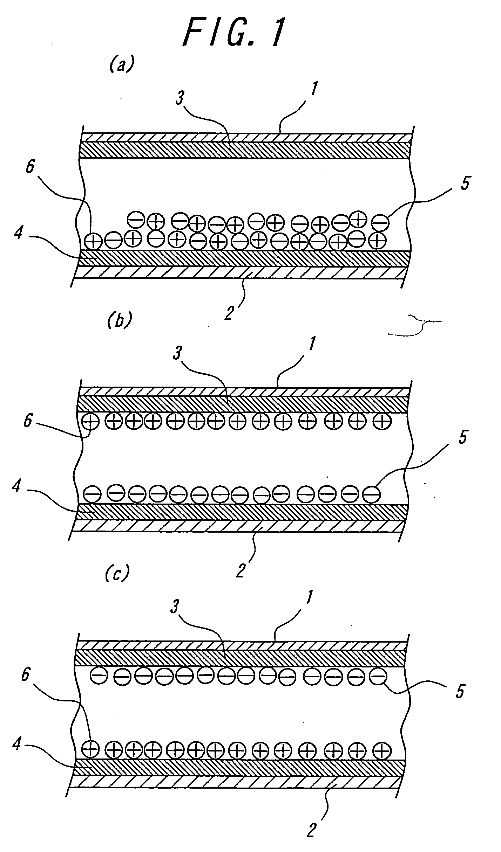

Figs. 1a to 1c are schematic views respectively showing first and second embodiments of the image display element of the image display panel used for the image display device according to the first aspect of the invention and its display driving method. In the embodiments shown in Figs. 1a to 1c, numeral 1 is a transparent substrate, numeral 2 is an opposed substrate, numeral 3 is a display electrode (transparent electrode), numeral 4 is an opposed electrode, numeral 5 is a negatively chargeable particle, numeral 6 is a positively chargeable particle.

Fig. 1a shows a state such that the negatively chargeable particles 5 and the positively chargeable particles 6 are arranged between opposed substrates (transparent substrate 1 and opposed substrate 2). Under such a state, when a voltage is applied in such a manner that a side of the display electrode 3 becomes low potential and a side of the opposed electrode 4 becomes high potential, as shown in Fig. 1b, the positively chargeable particles 6 fly and move to the side of the display electrode 3 and the negatively chargeable particles 5 fly and move to the side of the opposed electrode 4 by means of Coulomb's force. In this case, a display face viewed from a side of the transparent substrate 1 looks like a color of the positively chargeable particles 6. Next, when a voltage is applied in such a manner that the side of the display electrode 3 becomes high potential and the side of the opposed electrode 4 becomes low potential by reversing potentials, as shown in Fig. 1c, the negatively chargeable particles 5 fly and move to the side of the display electrode 3 and the positively chargeable particles 6 fly and move to the side of the opposed electrode 4 by means of Coulomb's force. In this case, the display face viewed from the side of the transparent substrate 1 looks like a color of the negatively chargeable particles 5.

The display states shown in Figs. 1b and 1c are repeatedly changeable only by reversing the potentials of a power source, and thus it is possible to change colors on the display face reversibly by reversing the potentials of the power source as mentioned above.

The colors of the particles can be arbitrarily selected. For example, when the negatively chargeable particles 5 are white color and the positively chargeable particles 6 are black color, or, when the negatively chargeable particles 5 are black color and the positively chargeable particles 5 are white color, a reversible image display between white color and black color can be performed. In this method, since the particles are once adhered to the electrode by means of an imaging force, a display image can be maintained for a long time after a voltage apply is stopped, thereby showing an excellent memory property.

In the present invention, since the chargeable particles fly and move in the gas, the response speed of the image display is extremely fast and the response speed of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

In the image display device explained in Figs. 1a - 1c according to the first embodiment of the first aspect of the invention, micro-concave portions, micro-convex portions, or both of the micro-concave portions and the micro-convex portions are provided to a part of or an overall of a surface of the electrode (here, display electrode 3 and opposed electrode 4). In this case, a shape of the micro-concave portions and/or the micro-convex portions is important. From this viewpoint, it is preferred that the micro-concave portions and/or the micro-convex portions are constructed in such a manner that the following formulas are satisfied: average width/maximum average particle size > 2; and average height/maximum average particle size > 2; where a length across corner of a projection shape of the micro-concave portions and/or the micro-convex portions with respect to an electrode surface is assumed to be the average width, an average absolute value of a depth and/or a height of the micro-concave portions and the micro-convex portions is assumed to be the average height (depth), and a largest average particle size among the two or more groups of particles is assumed to be the maximum average particle size.

In the image display device according to the first embodiment of the first aspect of the invention, a shape of the micro-concave portions and/or the micro-convex portions provided to the electrode surface may be circle shape, ellipse shape, square shape, rectangle shape, polygon shape, line shape, curve shape, indeterminate shape or a combination thereof. Moreover, even in the case of a segment display in which an area of one pixel becomes particularly large, it is possible to obtain the same effects by arranging the micro-concave portions and/or the micro-convex portions repeatedly. In this case, as a repeated arrangement, use may be made of lattice arrangement, hound's-tooth arrangement, pitch variable arrangement, random arrangement and so on.

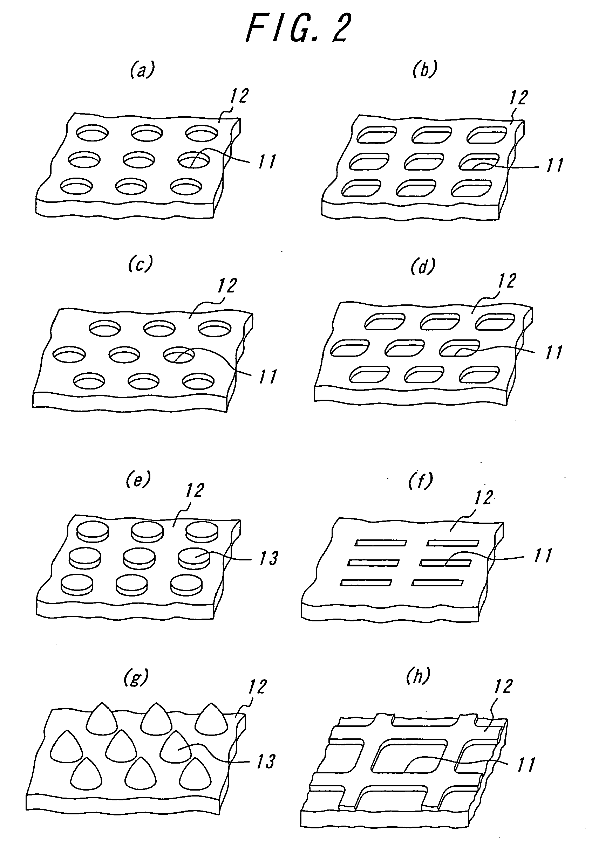

Figs. 2a - 2h are schematic views respectively explaining one embodiment of the micro-concave portions and/or the micro-convex portions provided to the electrode surface. In Fig. 2a, micro-concave portions 11 having a circle shape are provided to a surface of an electrode 12 in a lattice arrangement. In Fig. 2b, the micro-concave portions 11 having a racetrack shape are provided to the surface of the electrode 12 in a lattice arrangement. In Fig. 2c, the micro-concave portions 11 having a circle shape are provided to the surface of the electrode 12 in a hound's-tooth arrangement. In Fig. 2d, the micro-concave portions 11 having a racetrack shape are provided to the surface of the electrode 12 in a hound's-tooth arrangement. In Fig. 2e, micro-convex portions 13 having a circle shape are provided to the surface of the electrode 12 in a lattice arrangement. In Fig. 2f, the micro-concave portions 11 having a line slit shape are provided to the surface of the electrode 12 in a parallel arrangement. In Fig. 2g, the micro-convex portions 13 having a cone shape are provided to the surface of the electrode 12 in a lattice arrangement. In Fig. 2h, the micro-concave portions 11 having a square shape are provided to the surface of the electrode 12 like a waffle.

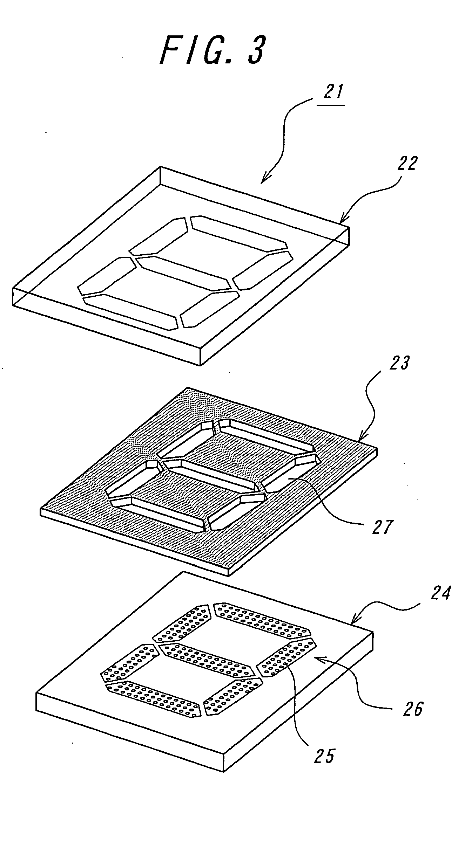

Fig. 3 is a schematic view showing one embodiment in which the first embodiment of the first aspect of the invention is applied to a segment display device. In the embodiment shown in Fig. 3, a segment display device 21 is constructed by stacking a transparent substrate 22, a spacer 23 and an opposed substrate 24. To a surface of the transparent substrate 22 at a side of the spacer 23, a transparent electrode (not shown) having a shape corresponding to respective segments of a display pattern is arranged. As the spacer 23, use is made of a black spacer having openings 27 corresponding to respective segments of the display pattern. Seven segment electrodes 26, to which a plurality of micro-concave portions 25 having a circle shape are provided, are formed to a surface of the opposed substrate 24 at the spacer 23 side respectively. To the transparent electrode and the segment electrode 26, wiring lines not shown are arranged so as to connect them to a drive circuit not shown. Two or more kinds of the particles having different colors and different charge properties i.e. the positively chargeable particles and the negatively chargeable particles as shown in the above embodiment are filled in respective seven openings 27 of the spacer 23. It should be noted that a thickness of the spacer 23 is controlled to make a distance between the electrodes to a predetermined distance. Operation of the segment display shown in Fig. 3 is the same as that of the image display device mentioned above.

In the segment display device 21 mentioned above, the segment electrode 26 having the micro-concave portions 25 may be manufactured in such a manner that one surface of aluminum plate having a square shape for example 100 mm $\times$ 100 mm and a thickness of 1 mm is etched to form a plurality of micro-concave portions 25 and the etched aluminum plate is cut into respective segment shapes.

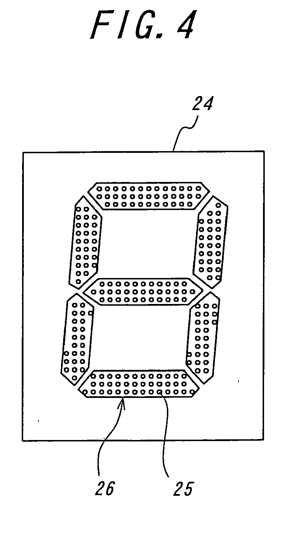

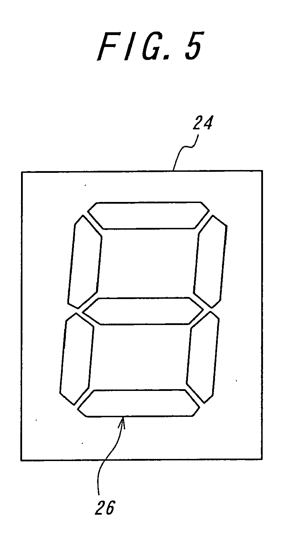

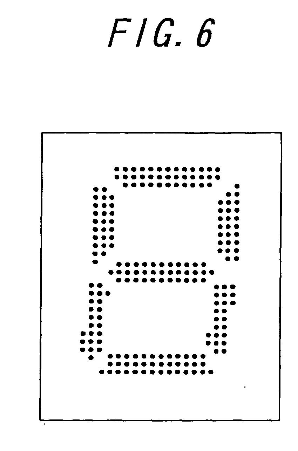

As another example, the opposed substrate 24 (Fig. 4) on which the segment electrode 26 having the micro-convex portions are arranged may be manufactured as follows. At first, as shown in Fig. 5, the segment electrode 26 corresponding to the display pattern is formed on a glass substrate by means of ITO transparent electrodes. Then, as shown in Fig. 6, a screen 28 having openings corresponding to the portions, to which the micro-convex portions are formed, is prepared. This screen is overlapped on the glass substrate on which the segment electrode 26 is formed. A paste for forming PDP ribs is adhered to a surface of the segment electrode 26 through the openings. In this manner, the predetermined opposed substrate 24 is manufactured. In this case, a height of the micro-convex portions can be adjusted to a predetermined value by controlling a viscosity of the paste and a dimension of the openings.

As still another example, the opposed substrate 24 (Fig. 4) on which the segment electrode 26 having the micro-concave portions are arranged may be manufactured as follows. At first, as shown in Fig. 5, the segment electrode 26 corresponding to the display pattern is formed on the glass substrate by means of the ITO transparent electrode. Then, a resist film having a thickness of 50 $\mu$m is adhered to an overall surface of the glass substrate. The resist film is exposed by UV through the photo-mask 28 (refer to Fig. 6) corresponding to the display pattern and is etched so as to form the micro-concave portions to the segment electrode 26. In this manner, a depth of the micro-concave portions can be adjusted to a predetermined value by controlling a time of the etching operation.

In the image display device explained in Figs. 1a - 1c, the second embodiment of the first aspect of the invention is characterized in that micro-cutout holes (explained below) are provided to a part of or an overall of a surface of the electrode (here, display electrode 3 and opposed electrode 4). In this case, a shape of the micro-cutout holes is important. From this viewpoint, it is preferred that he following formula is satisfied: maximum width / maximum average particle size > 10; where a largest length across corner of a shape of the micro-cutout holes is assumed to be the maximum width and a largest average particle size among the two or more groups of particles is assumed to be the maximum average particle size.

In this embodiment, a shape of the micro-cutout holes provided to the electrode surface may be circle shape, ellipse shape, square shape, rectangle shape, polygon shape, line shape, curve shape, indeterminate shape or a combination thereof. Moreover, even in the case of a segment display in which an area of one pixel becomes particularly large, it is possible to obtain the same effects by arranging the micro-cutout holes repeatedly. In this case, as a repeated arrangement, use may be made of lattice arrangement, hound's-tooth arrangement, pitch variable arrangement, random arrangement and so on.

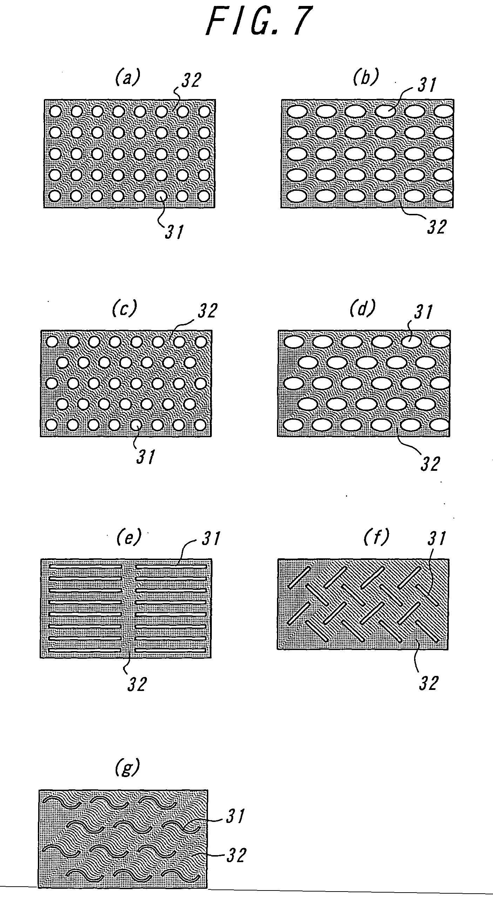

Figs. 7a - 7g are schematic views respectively explaining one embodiment pf the micro-cutout holes formed to the electrode surface by cutting. In Fig. 7a, micro-cutout holes 31 having a circle shape are provided to a surface of an electrode 32 in a lattice arrangement. In Fig. 7b, the micro-cutout holes 31 having an ellipse shape are provided to the surface of the electrode 32 in a lattice arrangement. In Fig. 7c, the micro-cutout holes 31 having a circle shape are provided to the surface of the electrode 32 in a hound's-tooth arrangement. In Fig. 7d, the micro-cutout holes 31 having an ellipse shape are provided to the surface of the electrode 32 in a hound's-tooth arrangement. In Fig. 7e, the micro-cutout holes 31 having a sine slit shape are provided to the surface of the electrode 32 in a parallel arrangement. In Fig. 7f, the micro-cutout holes 31 having a line slit shape are provided to the surface of the electrode 32 in two alternating directions different with each other by 90˚. In Fig. 7g, the micro-cutout holes 31 having a curve line shape are provided to the surface of the electrode 32 in a hound's-tooth arrangement.

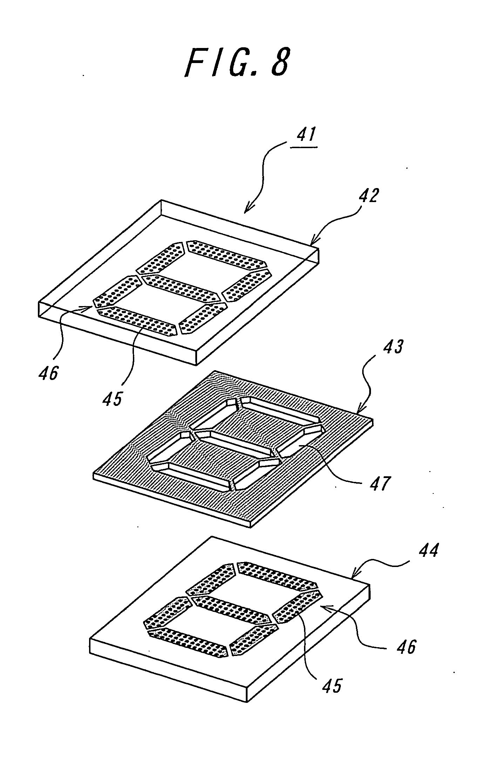

Fig. 8 is a schematic view showing one embodiment in which the second embodiment of the first aspect of the invention is applied to a segment display device. In the embodiment shown in Fig. 8, a segment display device 41 is constructed by stacking a transparent substrate 42, spacer 43 and an opposed substrate 44. Seven segment electrodes 46, to which a plurality of micro-cutout holes 45 having a dot shape are provided, are formed to a surface of the transparent substrate 42 at a side of the spacer 43, respectively. As the spacer 43, use is made of a blue spacer having openings 47 corresponding to respective segments of the display pattern. Seven segment electrodes 46, to which a plurality of the micro-cutout holes 45 are provided, are formed to a surface of the opposed substrate 44 at a side of the spacer 43 respectively, as is the same as the transparent substrate 42.

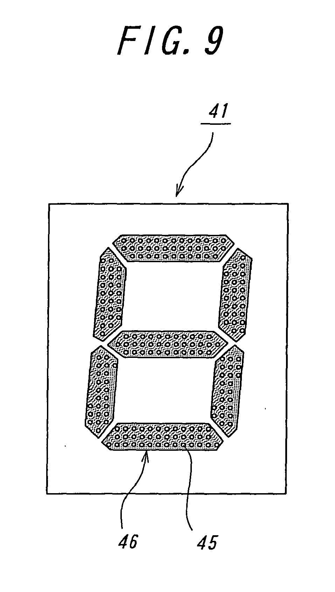

Then, two or more kinds of particles having different colors and different charge properties i.e. the positively chargeable particles and the negatively chargeable particles are filled in respective seven openings 47 of the spacer 43. Operation of the segment display device 41 shown in Fig. 8 is the same as that of the image display device mentioned above. In the embodiment shown in Fig. 8, a dimension of respective segments is for example a width of about 1 cm, a length of about 5 cm and a whole height of a letter "8" of about 10 cm. Moreover, a shape of the micro-cutout holes 45 is not apparently limited to the above shapes, and as shown in Fig. 9, the micro cutout holes 45 having a circle shape may be provided to respective segments in a lattice arrangement.

Hereinafter, a substrate of the image display device according to the first and second embodiments of the first aspect of the invention will be explained. With regard to the substrate, at least one substrate must be transparent substrate capable of recognizing the displaying color from outside of the display panel, and a material with large transmission factor of visible light and with excellent heat resistance is preferable. The presence of flexibility as the image display device is selected appropriately by the usage, for example, the flexible materials are selected for the usage as an electronic paper and so on, and materials having no flexibility are selected for the usage as display units for portable devices such as cellular phones, PDAs, and notebook personal computers.

Examples of the substrate material include polymer sheets such as polyethylene terephthalate, polymer sulfone, polyethylene, or polycarbonate, and inorganic sheets such as glass, quartz or so.

The thickness of the substrate is preferably 2 to 5000 $\mu$m, more preferably 5 to 1000 $\mu$m. When the thickness is too thin, it becomes difficult to maintain strength and distance uniformity between the substrates, and when the thickness is too thick, vividness and contrast as a display capability degrade, and in particular, flexibility in the case of using for an electron paper deteriorates.

Then, the particles used in the image display device according to the invention will be explained. Although any of colored particles negatively or positively chargeable having capability of flying and moving by Coulomb's force are employable, spherical particles with light specific gravity are particularly preferable. The average particle diameter is preferable to be 0.1 to 50 $\mu$m, particularly to be 1 to 30 $\mu$m. When the particle diameter is less than this range, charge density of the particles will be so large that an imaging force to an electrode and a substrate becomes too strong; resulting in poor following ability at the inversion of its electric field, although the memory characteristic is favorable. On the contrary, when the particle diameter exceeds the range, the following ability is favorable, however, the memory characteristic will degrade.

Although the method for charging the particles negatively or positively is not particularly limited, a corona discharge method, an electrode injection-charge method, a friction charge method and so on are employable. It is preferable that the absolute value of the difference between the surface charge densities of the particles, which are measured by a blow-off method using carriers, is not less than 5 $\mu$C/m$^2$ and not larger than 150 $\mu$C/m$^2$. When the absolute value of the surface charge density is less than this range, response speed to the change of an electric field will be late, and the memory property degrades. When the absolute value of the surface charge density exceeds this range, image force for the electrode or the substrate will be so strong that the memory property will be favorable, but following ability will be poor in the case where the electric field is inverted.

Hereinafter, the method of measuring the charge amount of particles and the method of measuring the specific gravity of particles, both necessary for calculating the surface charge density in the invention, will be explained.

<Blow-off measuring theory and method>

In the blow-off method, a mixture of the particles and the carriers are placed into a cylindrical container with nets at both ends, and high-pressure gas is blown from the one end to separate the particles and the carriers, and then only the particles are blown off from the mesh of the net. In this occasion, charge amount of reverse blown polarity remains on the carriers with the same charge amount of the particles carried away out of the container. Then, all of electric flux by this electric charge are collected to Faraday cage, and are charged across a capacitor with this amount. Accordingly, the charge amount of the particles is determined as Q=CV (C: capacity, V: voltage across both ends of the capacitor) by measuring potential of both ends of the capacitor.

As a blow-off powder charge amount measuring instrument, TB-200 produced by Toshiba Chemical Co., Ltd. was used.

Two kinds of positively chargeable and negatively chargeable resin were employed as the carriers, and charge density per unit area (unit: $\mu C/m^2$) was measured in each case. Namely, F963-2535 available from Powder TEC Co., Ltd. was employed as a positive chargeable carrier (the carrier whose opponent is positively charged and itself tends to be negative) and F921-2535 available from Powder TEC Co., Ltd. was employed as negatively chargeable carrier (the carrier whose opponent is negatively charged and itself tends to be positive).

The surface charge density of the particles was obtained from the measured charge amount, the average particle diameter and specific gravity of the particles measured separately.

<Particle specific gravity measuring method>

The specific gravity was measured with the use of a hydrometer produced by Shimadzu Seisakusho Ltd. (brand name: Multi volume Density Meter H1305).

Because it is necessary for the particles to hold the charged electric charge, insulating particles with the volume specific resistance of $1\times10^{10}\ \Omega \cdot$ cm or greater are preferable, and in particular, insulating particles with the volume specific resistance of $1\times10^{12}\ \Omega \cdot$ cm or greater are more preferable. Further, the particles with slow charge attenuation property evaluated by the measuring method below are more preferable.

Namely, applying the voltage of 8 kV to a Corona generator disposed with a distance of 1 mm to the surface to generate Corona discharge, charging the surface, and then, measuring the change of the surface potential, determine the suitability. In this occasion, it is preferable to select the material whose maximum surface potential will be 300 V or greater after 0.3 seconds, more preferable to select the material whose maximum surface potential will be 400 V or greater after 0.3 second as the material for composing the particles.

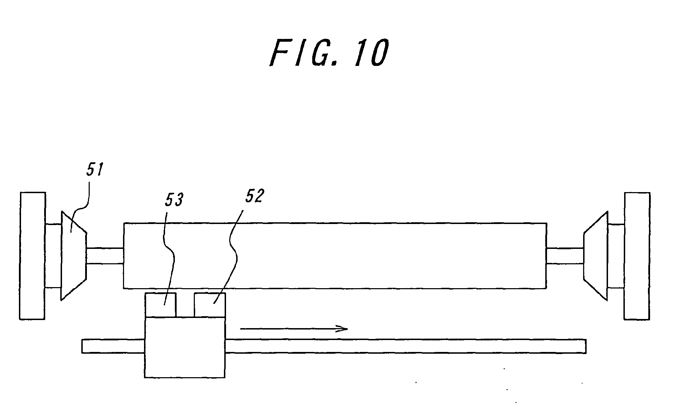

Additionally, the foregoing surface potential is measured by means of an instrument (CRT2000 produced by QEA Inc.) as shown in Fig. 10. In this instrument both end portions of a roll shaft being held with chuck 51, compact scorotron discharger 52 and surface potential meter 53 are spaced with predetermined interval to form a measurement unit. Facedly deploying the measurement unit with a distance of 1 mm from the surface of the particles, and by moving the measurement unit from one end portion of the roll shaft to the other end portion with an uniform speed, with the state that the roll shaft remains stopping and while giving surface charge, a method of measuring its surface potential is preferably adopted. Moreover, measurement environment should be settled at the temperature of 25 $\pm$ 3°C and the humidity of 55 $\pm$ 5% RH.

If the particles satisfy electrostatic property and so on, the particles may be formed by any materials. For example, it is formed by resin, charge control agent, coloring agent, inorganic additive and so on, or, by coloring agent and so on only.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable. Two kinds or more of these may be mixed and used.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-minute particles of silica, ultra-minute particles of titanium oxide, ultra-minute particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable. Examples of black pigments include carbon black, copper oxide, manganese dioxide, aniline black, and activate carbon. Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, and tartrazinelake. Examples of orange pigments include red chrome yellow, molybdenum orange, permanent orange GTR, pyrazolone orange, Balkan orange, indusren brilliant orange RK, benzidine orange G, and Indusren brilliant orange GK. Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, and brilliant carmine 3B.

Examples of purple pigments include manganese purple, first violet B, and methyl violet lake. Examples of blue pigments include Berlin blue, cobalt blue, alkali blue lake, Victoria blue lake, phthalocyanine blue, metal-free phthalocyanine blue, partially chlorinated phthalocyanine blue, first sky blue, and Indusren blue BC. Examples of green pigments include chrome green, chromium oxide, pigment green B, Malachite green lake, and final yellow green G. Further, examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc. These coloring agents may be used alone or in combination of two or more kinds thereof. Particularly, carbon black is preferable as the black coloring agent, and titanium oxide is preferable as the white coloring agent.

Although the manufacturing method of the particles is not specifically restricted, mixing/grinding method or polymerization method for producing toner of electrophotography is, for example, similarly employable. Further the method of coating resin or charge control agent and so on over the surface of powders such as inorganic or organic pigments is also employable.

The distance between the facing substrates is suitably adjusted in a manner where the particles can move and maintain the contrast of image display; however, it is adjusted usually within 10 to 5000 $\mu$m, preferably within 30 to 500 $\mu$m. The volume population of the particle existing in the space between the faced substrates is preferable to be 10 to 90%, more preferable to be 20 to 70%. When the volume population exceeds 80%, it causes some troubles in the particle movement, and when it is less than 10%, contrast tens to be indistinct.

In the image display panel used in the image display device according to the invention, plural of the foregoing display element are dispose in a matrix form, and images can be displayed. In the case of monochrome display, one display element makes one pixel. In the case of full color display, three kinds of display elements, i.e., one group of display elements each having color plate of R (red), G (green) and B (blue) respectively and each having particles of black composes a set of disposed elements preferably resulting in the reversible image display panel having the sets of the elements.

The image display device according to the first aspect of the invention is applicable to the image display unit for mobile equipments such as notebook personal computers, PDAs, cellular phones and so on; to the electric paper for electric book, electric newspaper and so on; to the bulletin boards such as signboards, posters, blackboards and so on; and to the image display unit for electric calculator, home electric application products, auto supplies and so on.

In the embodiment mentioned above, the explanations are made to the image display device wherein the partition wall is not used, but it is possible to use the partition wall. In this case, since a cell size can be made larger and an area rate of the partition wall with respect to the display area can be made smaller, it is possible to obtain a higher contrast.

Then, the image display device according to the second aspect of the invention will be explained.

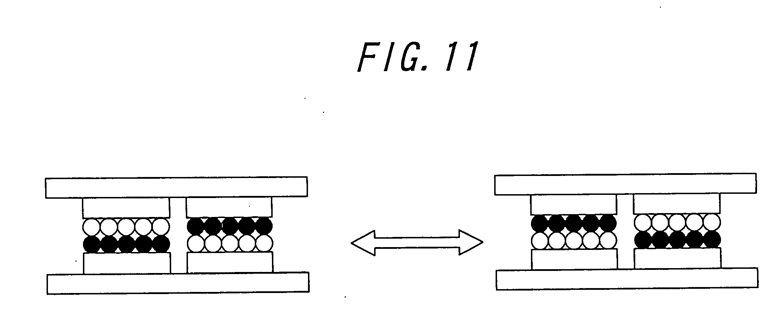

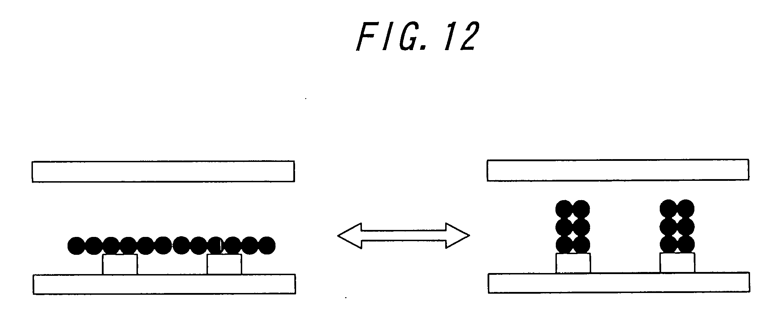

The image display device according to the first and second embodiments of the second aspect of the invention can be applied to a display method (refer to Fig. 11) wherein two or more kinds of particles having different colors and different charge properties are moved in a vertical direction with respect to the substrate and also to a display method (refer to Fig. 12) wherein one kind of particles having one color are moved in a parallel direction with respect to the substrate. From the viewpoint of stability, it is preferred that the image display device of this embodiment is applied to the former display method.

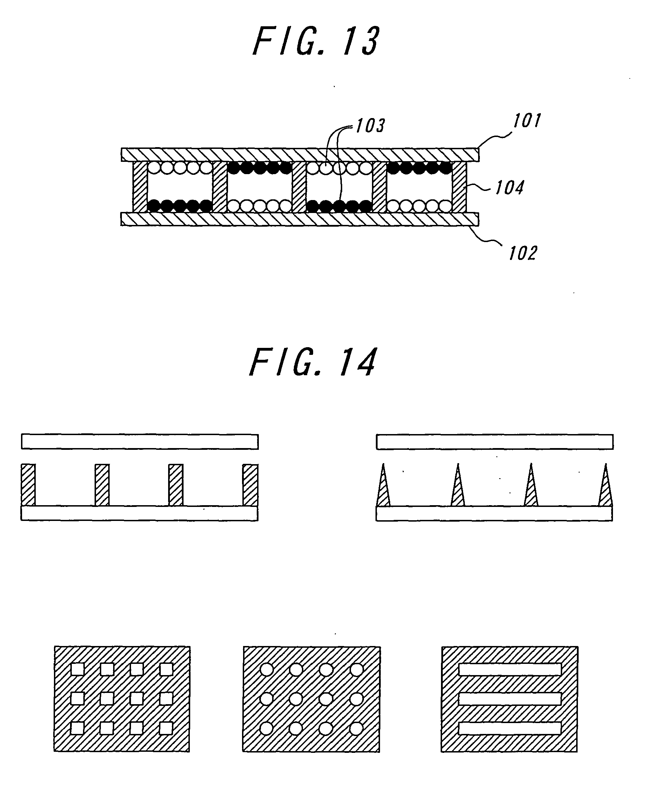

One embodiment of the image display device according to the invention is shown in Fig. 13.

It is constructed by opposed substrates 101 and 102, particles 103 and a partition wall 104 arranged according to need.

At least one of the substrates 101 and 102 must be a transparent substrate capable of recognizing the displaying color from outside of the display panel, and a material with large transmission factor of visible light and with excellent heat resistance is preferable. The presence of flexibility as the image display device is selected appropriately by the usage, for example, the flexible materials are selected for the usage as an electronic paper and so on, and materials having no flexibility are selected for the usage as display units for portable devices such as cellular phones, PDAs, and notebook personal computers.

Examples of the substrate material include polymer sheets such as polyethylene terephthalate, polyether sulfone, polyethylene, or polycarbonate, and inorganic sheets such as glass, quartz or so.

The thickness of the substrate is preferably 2 to 5000 $\mu$m, more preferably 5 to 1000 $\mu$m. When the thickness is too thin, it becomes difficult to maintain strength and distance uniformity between the substrates, and when the thickness is too thick, vividness and contrast as a display capability degrade, and in particular, flexibility in the case of using for an electron paper deteriorates.

An electrode may be arranged on the substrate according to need.

In the case of arranging no electrode on the substrate, the particles charged in a predetermined characteristic and having a color is pulled in or rebounds with respect to the substrate by means of an electric field generated by applying an electrostatic latent image on an outer surface of the substrate. Then, the particles aligned in accordance with the electrostatic latent image are observed from outside of the display device through the transparent substrate.

In this case, the electrostatic latent image mentioned above can be generated for example by a method wherein an electrostatic latent image generated in a known electrophotography system using an electrophotography photo-conductor is transferred and formed on the substrate of the image display device according to the invention, or, by a method wherein an electrostatic latent image is directly formed on the substrate by an ion flow.

In the case of arranging an electrode on the substrate, the particles charged in a predetermined characteristic and having a color is pulled in or rebounds with respect to the substrate by means of an electric field generated on respective electrodes formed on the substrate by applying an outer voltage thereto. Then, the particles aligned in accordance with the electrostatic latent image are observed from outside of the display device through the transparent substrate.

In this case, the electrode may be formed of electroconductive materials which are transparent and having pattern formation capability. As such electroconductive materials, indium oxide, metals such as aluminum, electrodonductive polymer such as polyaniline, polypyrrole, polythiophene and so on, formed by for example vacuum vapor deposition, coating and so on. Additionally, the thickness of the electrode may be suitable unless the electroconductivity is absent or any hindrance exists in optical transparency, and it is preferable to be 3 to 1000 nm, more preferable to be 5 to 400 nm.

In this case, the applied outer voltage may be superimposed with a direct current or an alternate current.

As mentioned above, in the image display device according to the first embodiment of the second aspect of the invention, a surface of the substrate to which the particles are contacted is coated thinly by an insulation member having a volume resistance of not less than $1 \times 10^{12}$ [$\Omega \cdot$cm] so as to provide a thin insulation film. In this case, an adhesion force between the particles and the wall surface can be decreased largely and the particles are liable to be clown off from the wall surface. Therefore, it is possible to achieve the decrease of the drive voltage.

Here, as the adhesion force of the particles with respect to the wall surface, there are electric imaging force, intermolecular force, liquid bridging force, dielectric polarization force, contact charge adhesion force, adhesion force due to particle deformation and so on. Particularly, in the particles used for the dry-type display, electric imaging force is a most influential factor.

In the present invention, as the insulation member for coating the substrate, use is made of polymer resin having a low dielectric constant such as fluorocarbon resin, acrylate resin, silicone resin, polycarbonate resin; inorganic substance such as $SiO_2$, metal oxide; transparent filler such as silica fine particles; or a member blending them. If further considering liquid bridging force, intermolecular force and so on, it is particularly preferred to use fluorocarbon resin, $SiO_2$.

In the present invention, a volume resistance of the insulation member is not less than $1 \times 10^{12}$ [$\Omega \cdot$cm] and preferably not less than $1 \times 10^{14}$ [$\Omega \cdot$cm].

A thickness of a thin insulation film coated on the substrate is preferably not more than 5 $\mu$m and further preferably in a range of 0.1 - 2 $\mu$m.

If the thickness of the thin insulation film exceeds 5 $\mu$m, electric imaging force may be decreased, but an electric field is sometimes decreased as compared with an electric field generated when the same voltage is applied to the substrate with no insulation coating layer, so that Coulomb's force for moving the particles is decreased. This phenomenon is almost vanished if the coating thickness is not more than 5 $\mu$m.

If the thickness of the thin insulation film is too thin such as less than 0.1 $\mu$m, a decrease of electric imaging force is sometimes insufficient.

As a method for coating the insulation member, use is made of printing method, dipping method. Electrostatic coating method, sputtering method, deposition method, roll-coater method, plasma treatment method, but it is not limited to the above method.

As the insulation member for coating the substrate, it is preferred to use a resin having a low charge decreasing property and satisfying the following condition.

Specifically, as the insulation member to be coated on the substrate, use is made of a resin insulation member in which, when the insulation member to be coated on the substrate is made into a film having a thickness of actual coating film, the maximum surface potential, in the case that the surface of the insulation member is charged by a generation of Corona discharge caused by applying a voltage of 8 KV to a Corona discharge device deployed at a distance of 1 mm from the surface, is 300 V or greater preferably 400 V or greater at 0.3 second after the Corona discharge.

Additionally, the foregoing surface potential is measured by means of an instrument (CRT2000 produced by QEA Inc.) as shown in Fig. 10. In this instrument both end portions of a roll shaft being held with chuck 51, compact scorotron discharger 52 and surface potential meter 53 are spaced with predetermined interval to form a measurement unit. Facedly deploying the measurement unit with a distance of 1 mm from the surface of the particles, and by moving the measurement unit from one end portion of the roll shaft to the other end portion with an uniform speed, with the state that the roll shaft remains stopping and while giving surface charge, a method of measuring its surface potential is preferably adopted. Moreover, measurement environment should be settled at the temperature of 25 ± 3°C and the humidity of 55 ± 5% RH.

As for the solvent insoluble rate of the insulation member to be coated, it is preferred that a solvent insoluble rate of the insulation member, which is defined by the following formula, is not less than 50% more preferably not less than 70%:

solvent insoluble rate (%) = (B/A) × 100; (here, A is a weight of the resin component before being immersed into the solvent and B is a weight of resin components after the particles is immersed into good solvent at 25°C for 24 hours).

If the solvent insoluble rate is less than 50%, a bleed is generated on a surface of the particles when maintaining for a long time. In this case, it affects an adhesion power with the particles and prevents a movement of the particles. Therefore, there is a case such that it affects a durability of the image display.

Here, as a solvent (good solvent) for measuring the solvent insoluble rate, it is preferred to use fluoroplastic such as methyl ethyl ketone and so on, polyamide resin such as methanol and so on, acrylic urethane resin such as methyl ethyl ketone, toluene and so on, melamine resin such as acetone, isopropanol and so on, silicone resin such as toluene and so on.

In the image display device of the second embodiment of the second aspect of the invention, an arithmetic average roughness (Ra) and a concave-convex average distance (Sm) of a surface of the substrate, to which the particles are contacted, satisfy the following formulas (1) and (2):

$$d(0.5)/10 \geq Ra \geq d(0.5)/200 \qquad \cdots \cdots (1)$$

$$d(0.5)/10 \geq Sm \geq d(0.5)/1000 \qquad \cdots \cdots (2)$$

(here, d(0.5) means a value of the particle size expressed by $\mu$m wherein an amount of the particles having the particle size larger than this value is 50%).

In the case that Ra and Sm satisfy the above formulas, the adhesion force of the particles with respect to the wall surface of the substrate is decreased. Here, the adhesion force of the particles with respect to the wall surface of the substrate means a total force of the adhesion forces such as electric imaging force, intermolecular force, liquid bridging force, dielectric polarization force, contact charge adhesion force, adhesion force due to particle deformation and so on. Particularly, in the case that d(0.5) of the particles is in a range of 0.1 - 50 $\mu$m as the dry-type image display device, intermolecular force is a most influential factor. That is, a contact area between the particles and the wall surface is drastically decreased by controlling values of Ra and Sm in a specific range, and the adhesion force between the particles and the wall surface is largely decreased, so that the particles are easy to remove from the wall surface. In this manner, the decrease of the drive voltage can be achieved.

Here, it is necessary for Ra to satisfy $d(0.5)/10 \geq Ra \geq d(0.5)/200$. If Ra exceeds this range, there occur the phenomena such that a deformation of the particles is easily generated and that a corner of projections on the substrate is stuck to the particles. Moreover, if Ra is smaller than this range, there is the possibility that the particles are contacted to a valley portion of the projections on the substrate, ant thus it is not possible to obtain the decrease of intermolecular force sufficiently. From the above viewpoints, it is preferred that Ra satisfy $d(0.5)/20 \geq Ra \geq d(0.5)/100$.

Moreover, it is necessary for Sm to satisfy d(0.5)/10≥Sm≥d(0.5)/1000. If Sm exceeds this range, a contact area between the particles and the wall surface becomes conversely larger, and thus it is not possible to obtain the decrease of intermolecular force. Further, if Sm is smaller than this range, contact points between the particles and the substrate are increased, and thus it is not possible to obtain the decrease of intermolecular force sufficiently.
From the above viewpoints, it is preferred that Sm satisfies d(0.5)/20≥Sm≥d(0.5)/500.

In order to control Ra and Sm to the above ranges respectively, It is necessary to apply a roughness to the substrate. The method for applying such a roughness is not limited, but use may be made of a coating method such as printing method, dipping method, electrostatic coating method, sputtering method, roll coater method, plasma treatment method and an etching method by utilizing a laser irradiation.

In the image display device according to the invention, the partition walls between the opposed substrates may be formed, and the display portion may be formed by a plurality of display cells.

A shape of the partition wall is suitably designed in accordance with a size of the particles to be used for the display and is not restricted. However, it is preferred to set a width of the partition wall to 10 - 1000 $\mu$m more preferably 10 - 500 $\mu$m and to set a height of the partition wall to 10 - 5000 $\mu$m more preferably 10 - 500 $\mu$m.

Moreover, as a method of forming the partition wall, use may be made of a double rib method wherein ribs are formed on the opposed substrates respectively and they are connected with each other and a single rib method wherein a rib is formed on one of the opposed substrates only. In the image display device according to the invention, in order to prevent a connection deviation during the connection operation, it is preferred to use the single rib method for the partition wall formation.

The display cell formed by the partition walls each made of rib has a square shape, a triangular shape, a circular shape as shown in Fig. 14 viewed from a plane surface of the substrate.

It is better to minimize a portion (area of frame portion of the display cell) corresponding to a cross section of the partition walls viewed from the display side. In this case, it is possible to improve a clearness of the image display.

Typical examples of the partition wall forming methods include a screen-printing method, a sandblast method, a photo-conductor paste method and an additive method.

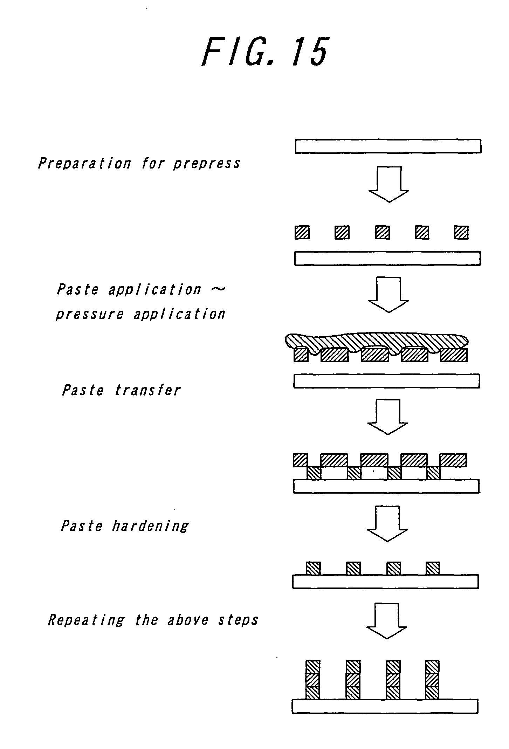

Specific processes of the screen-printing method shown in Fig. 15 are as follows.

(1) Produce pastes for a material of the partition wall.
(2) Prepare a prepress for printing a pattern of the partition wall, such as a stainless mess, a polyester mess and so on.
(3) Apply and transfer the pastes through the prepress on one of the substrates (according to need, the substrate on which the electrode pattern mentioned above is formed).
(4) Harden the pastes on the substrate by heating.
(5) Repeat (3) - (4) steps until a predetermined thickness (corresponding to a height of the partition wall) and produce a predetermined partition wall shape.

Here, as the prepress used in the above (3), use may be made of any means even if a predetermined partition wall pattern can be printed, and, for example, use may be made of a plated mesh for securing a high tension, a metal mesh made of a high tension material and so on, a chemical fiber mesh such as a polyester mesh, a tetoron® mesh and so on, and, a combination type mesh wherein polyester mesh is arranged between the prepress and an printing area.

In the screen printer wherein the pastes are transferred on the substrate by means of a squeegee and a scraper through the prepress mentioned above. In this case, it is preferred to set an attack angle of the squeegee to 10 - 30 degrees more preferably 15 - 25 degrees, to set a speed of the squeegee to 5 - 500 mm/sec more preferably 20 - 100 mm/sec, and to set an application pressure of the squeegee to 0.1 - 10 kg/cm$^2$ more preferably 0.5 - 3 kg/cm$^2$.

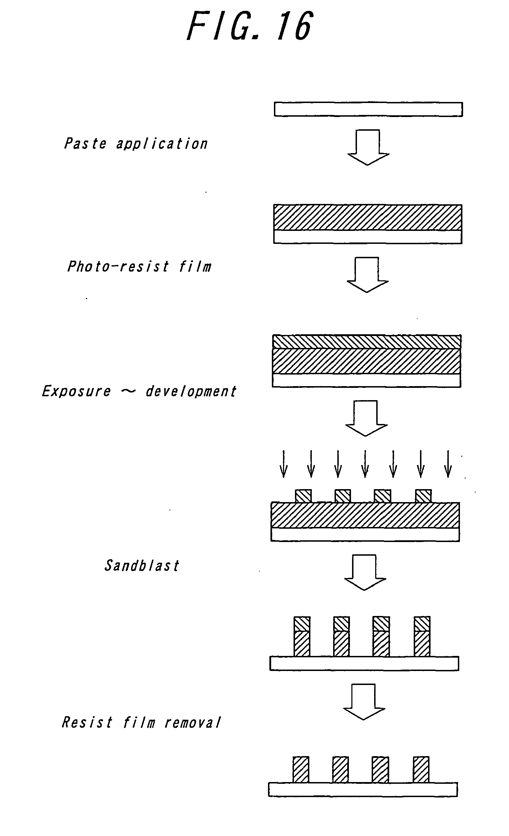

Specific processes of the sandblast method shown in Fig. 16 are as follows

(1) Produce pastes for a material of the partition wall.
(2) Apply the pastes on one of the substrates (according to need, the substrate on which the electrode pattern mentioned above is formed), and dry and harden the pastes.
(3) Adhere a photo-resist dry film on the pastes.
(4) Expose and etch the pastes to obtain a remaining pattern portion that becomes the partition wall.
(5) Etch the remaining pattern portion, from which the photo-resist is removed, by a sandblast to obtain a predetermined rib shape.

Here, in the sandblast method, it should be noted that polishing agents are controlled to be discharged straight from a nozzle of a sandblast apparatus by adjusting a balance between an air pressure applied to the polishing agents and a discharge amount of the polishing agents. Hereby, since a spreading of unnecessary polishing agents can be reduced and especially a generation of a side edge of the partition wall can be reduced, the partition wall having an excellent finishing shape can be obtained (particularly, side edges of the partition wall can be reduced).

As the polishing agents used for the sandblast, use is made of glass beads, talc, calcium carbonate, metal powders and so on.

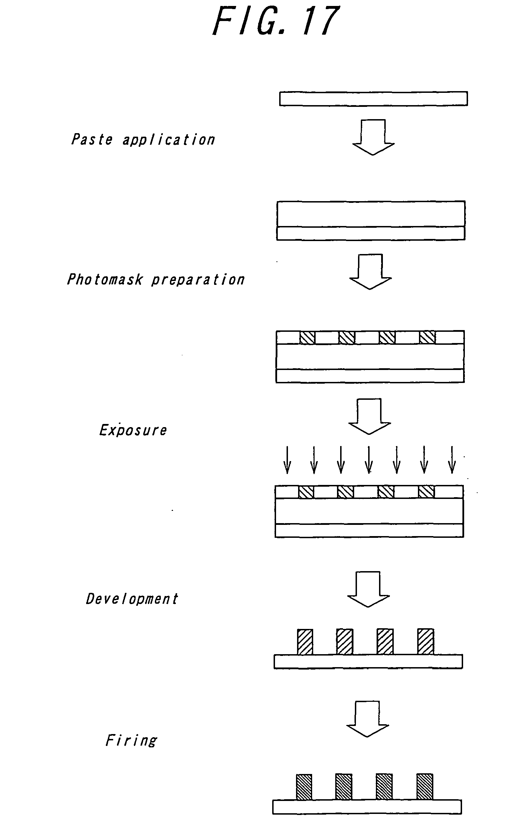

Specific processes of the photo-conductor paste method shown in Fig. 17 are as follows.

(1) Produce photosensitive pastes including photosensitive resin.
(2) Apply the photosensitive pastes on one of the substrates (according to need, the substrate on which the electrode pattern mentioned above is formed).
(3) Expose the photosensitive pastes at a portion corresponding only to the partition wall by means of a photo-mask and harden the photosensitive pastes (according to need, repeat the steps (2) and (3) until the partition wall has a predetermined height).
(4) Remove non-harden portion of the photosensitive resin by a development.
(5) Fire the harden portion of the photosensitive pastes according to need.

Here, the harden portion of the photosensitive pastes include at least inorganic powder, photosensitive resin, photo-initiator and further consist of solvent, resin and additives.

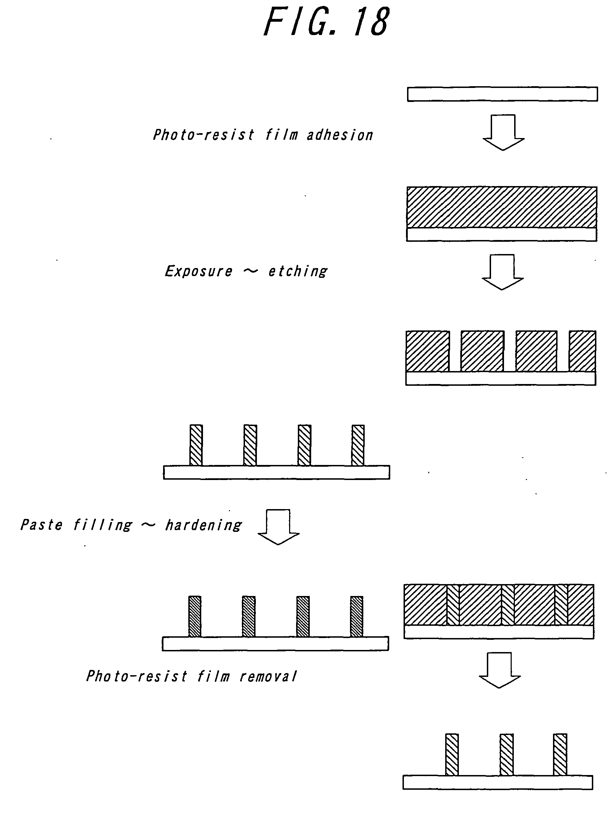

Specific processes of the additive method shown in Fig. 18 are as follows.

(1) Adhere a photo-resist film on the substrate.
(2) Leave the photo-resist film only at a portion between the partition walls to be formed by means of exposing and etching.
(3) Filling pastes to be the partition wall into a space between the photo-resist film and harden the pastes.
(4) Remove the photo-resist film to form a partition wall having a predetermined shape.

The pastes for the partition wall include at least inorganic powder and resin, and consist of solvent, additives and so on.

As the inorganic powder, use is made of ceramic powder, glass powder or a combination of one or more kinds of them.

Typical ceramic powder includes ceramic oxides such as $ZrO_2$, $Al_2O_3$, CuO, MgO, $TiO_2$, ZnO and so on, and ceramic non-oxides such as SiC, AIN, $Si_3O_4$ and so on.

Typical glass powder includes a substance obtained by melting raw materials having $SiO_2$, $Al_2O_3$, $B_2O_3$, $Bi_2O_3$, ZnO and so on, and cooling and grinding the melted raw materials. In this case, it is preferred that a glass transition point Tg is 300 - 500˚C. In this glass transition temperature range, since the firing step can be performed at a relatively low temperature, there is a merit that resin damage is small.

In the pastes for the partition wall, it is preferred that a particle size distribution Span of the inorganic powder, which is defined by the following formula, is not more than 8 more preferably not more than 5:

$$\mathrm{Span} = (d(0.9) - d(0.1))/d(0.5) \ ;$$

(here, d(0.5) means a value of the particle size expressed by $\mu$m wherein an amount of the particles having the particle size larger than or smaller than this value is 50%, d(0.1) means a value of the particle size expressed by $\mu$m wherein an amount of the particles having the particle size smaller than this value is 10%, and d(0.9) means a value of the particle size expressed by $\mu$m wherein an amount of the particles having the particle size smaller than this value is 90%).

By setting a value of Span to not more than 8, it is possible make a size of the inorganic powder in the pastes even. Therefore, if the processes of application to hardening for the pastes are repeated to make a lamination, it is possible to form accurately the partition wall.

Moreover, it is preferred that the average particle size d(0.5) of the inorganic powder in the pastes is 0.1 - 20 $\mu$m more preferably 0.3 - 10 $\mu$m. By doing so, it is also possible to form accurately the partition wall if the above processes are repeated to make a lamination.

Here, the particle size distribution and the particle size mentioned above can be measured by means of a laser diffraction/ scattering method. When a laser light is incident upon the particles to be measured, a light intensity distribution pattern due to a diffraction/scattering light occurs spatially. This light intensity distribution pattern corresponds to the particle size, and thus it is possible to measure the particle size and the particle size distribution. In the present invention, it is defined that the particle size and the particle size distribution are obtained by a volume standard distribution. Specifically, the particle size and the particle size distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

The resin included in the pastes for the partition wall can include the inorganic powder mentioned above if a predetermined partition wall can be formed. Typical examples of such a resin are thermoplastic resin, heat-hardening resin, and reactive resin.

If required solid state properties of the partition wall are considered, it is preferred to use a resin having a high molecular weight and a high glass transition point Tg. For example, it is preferred to use resins of acrylic-series, styrene-series, epoxy-series, urethane-series, polyester-series, and urea-series and it is especially preferred to use the resins of acrylic-series, epoxy-series, urethane-series, and polyester-series.

As the solvent added in the pastes for the partition wall, use is made of any solvent if it can dissolve the inorganic powder and the resin mentioned above. Typical examples of such a solvent are aromatic solvents such as ester phthalate, toluene, xylene, benzene; alcoholic solvents such as oxy-alcohol, hexanol, octanol; and ester solvents such as ester acetate and so on. Normally, 0.1 - 50 parts by weight of the solvent is added to 100 parts by weight of the inorganic powder.

In addition, according to need, it is possible to add dye, polymerization prevention agents, plasticizer, gum, dispersant, oxidation inhibitor, hardening agents, hardening accelerator, and sedimentation prevention agents.

The paste materials mentioned above are dispersed and mixed at a predetermined composition by means of kneader, agitator, or three rollers. If taking into consideration of workability, it is preferred to set a viscosity to 500 - 300000 cps (500 - 300000 mPas).

Then, the particles for the image display (hereinafter, refer to particles) used in the image display device according to the second aspect of the invention will be explained.

The particles may be formed by mixing necessary resin, charge control agent, coloring agent, additive and so on and grinding them, or, by polymerizing from monomer, or, by coating a particle with resin, charge control agent, coloring agent, and additive and so on.

Hereinafter, typical examples of resin, charge control agent, coloring agent, additive and so on will be explained.

Typical examples of the resin include urethane resin, acrylic resin, polyester resin, acryl urethane resin, silicone resin, nylon resin, epoxy resin, styrene resin, butyral resin, vinylidene chloride resin, melamine resin, phenolic resin, fluorocarbon polymers, and it is possible to combine two or more resins. For the purpose of controlling the attaching force with the substrate, acryl urethane resin, acryl urethane silicone resin, acryl urethane fluorocarbon polymers, urethane resin, fluorocarbon polymers.

Examples of the electric charge control agent include, positive charge control agent include the fourth grade ammonium salt compound, nigrosine dye, triphenylmethane compound, imidazole derivatives, and so on, and negative charge control agent such as metal containing azo dye, salicylic acid metal complex, nitroimidazole derivative and so on.

As for a coloring agent, various kinds of basic or acidic dye may be employable. Examples include Nigrosine, Methylene Blue, quinoline yellow, rose bengal and do on.

Examples of the inorganic additives include titanium oxide, Chinese white, zinc sulfide, antimonial oxide, calcium carbonate, zinc white, talc, silica, calcium silicate, alumina white, cadmium yellow, cadmium red, cadmium orange, titanium yellow, iron blue, ultramarine blue, cobalt blue, cobalt green, cobalt violet, ferric oxide, carbon black, copper powder, aluminum powder and so on.

Here, in order to further improve a repeating durability, it is effective to control a water absorbing rate and a solvent insoluble rate of the resin constituting the particles.

It is preferred that the water absorbing rate of the resin constituting the particles is not more than 3 % especially not more than 2 %. In this case, a measurement of the water absorbing rate is performed according to ASTM-D570 and a measuring condition is 23°C for 24 hours.

As for the solvent insoluble rate of the particles, it is preferred that a solvent insoluble rate of the particles, which is defined by the following formula, is not less than 50% more preferably not less than 70%:

$$\mathrm{solvent\ insoluble\ rate\ (\%) = (B/A) \times 100;}$$

(here, A is a weight of the resin component before being immersed into the solvent and B is a weight of resin components after the particles is immersed into good solvent at 25°C for 24 hours).

If the solvent insoluble rate is less than 50%, a bleed is generated on a surface of the particles when maintaining for a long time. In this case, it affects an adhesion power with the particles and prevents a movement of the particles. Therefore, there is a case such that it affects a durability of the image display.

Here, as a solvent (good solvent) for measuring the solvent insoluble rate, it is preferred to use fluoroplastic such as methyl ethyl ketone and so on, polyamide resin such as methanol and so on, acrylic urethane resin such as methyl ethyl ketone, toluene and so on, melamine resin such as acetone, isopropanol and so on, silicone resin such as toluene and so on.

It is preferred that the particles used in the image display device according to the invention have a circular shape.

It is preferred that particle size distribution Span of the particles, which is defined by the following formula, is not more than 5 preferably not more than 3:

$$\mathrm{Span} = (d(0.9) - d(0.1))/d(0.5) \; ;$$

(here, d(0.5) means a value of the particle size expressed by $\mu$m wherein an amount of the particles having the particle size larger than or smaller than this value is 50%, d(0.1) means a value of the particle size expressed by $\mu$m wherein an amount of the particles having the particle size smaller than this value is 10%, and d(0.9) means a value of the particle size expressed by $\mu$m wherein an amount of the particles having the particle size smaller than this value is 90%).

If the particle size distribution Span of the particles is set to not more than 5, the particle size becomes even and it is possible to perform an even particle movement.

Moreover, as the average particle size of the particles used in the image display, it is preferred to set d(0.5) to 0.1 - 50 $\mu$m.

If the average particle size exceeds this range, the image clearness sometimes deteriorated, and, if the average particle size is smaller than this range, an agglutination force between the particles becomes larger and the movement of the particles is prevented.

Further, as a correlation between the particles, it is preferred to set a ratio of d(0.5) of the particles having smallest diameter with respect to d(0.5) of the particles having largest diameter to not more than 50 preferably not more than 10. Even if the particle size distribution Span is made smaller, the particles having different charge properties with each other are moved in the opposite direction. Therefore, it is preferred that the particle sizes are formed closely with each other and equivalent amounts of the particles are easily moved in the opposite direction.

In this case, the particle size distribution and the particle size can be measured, as is the same as the inorganic powder mentioned above.

Further, in the present invention, it is important to control a gas in a gap surrounding the particles between the substrates, and a suitable gas control contributes an improvement of a display stability. Specifically, it is important to control a humidity of the gap gas to not more than 60% RH at 25˚C, preferably not more than 50% RH, more preferably not more than 35% RH.

In the image display device shown in Fig. 13, the above gap means a gas portion surrounding the particles obtained by an occupied portion of the particles 103, an occupied portion of the partition wall 104 and a seal portion of the device from the space between the opposed substrates 101 and 102.

A kind of the gap gas is not limited if it has the humidity mentioned above, but it is preferred to use dry air, dry nitrogen gas, dry helium gas, dry carbon dioxide gas, dry methane gas and so on.

It is necessary to seal this gas in the device so as to maintain the humidity mentioned above. For example, it is important to perform the operations of filling the particles and assembling the substrate under an atmosphere having a predetermined humidity and to apply a seal member and a seal method for preventing a humidity inclusion from outside of the device.

The image display device according to the invention is applicable to the image display unit for mobile equipment such as notebook personal computers, PDAs, cellular phones and so on; to the electric paper for electric book, electric newspaper and so on; to the bulletin boards such as signboards, posters, blackboards and so on; to the rewritable paper substituted for a paper of copy machine, printer and so on; and to the image display unit for electric calculator, home electric application products, auto supplies and so on.

Then, the image display device according to the third aspect of the invention will be explained.

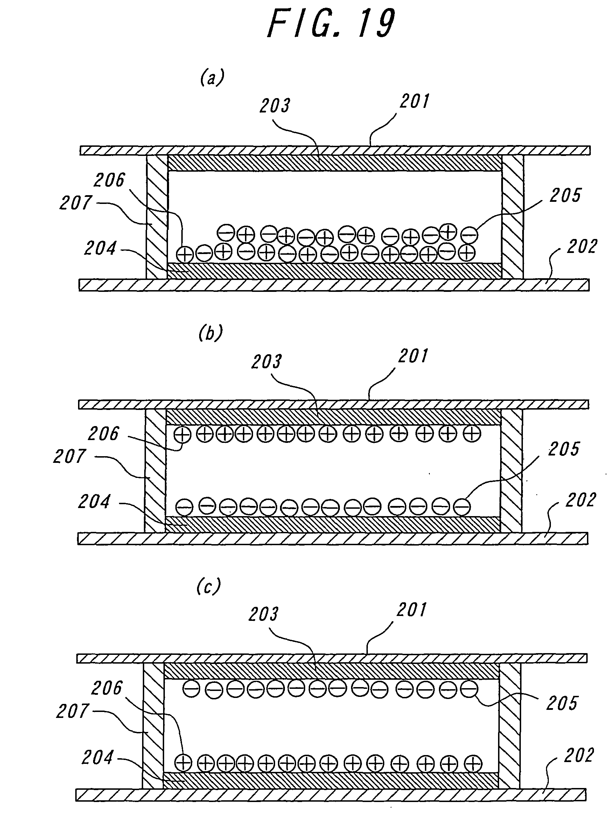

Figs. 19a - 19c are schematic views respectively showing one embodiment of a display element of a image display panel used in an image display device according to a third aspect of the invention and its display driving method. In the embodiment shown in Figs. 19a - 19c, numeral 201 is a transparent substrate, numeral 202 is an opposed substrate, numeral 203 is a display electrode (transparent electrode), numeral 204 is an opposed electrode, numeral 205 is a negatively chargeable particle, numeral 206 is a positively chargeable particle and numeral 207 is a partition wall.

Fig. 19a shows a state such that the negatively chargeable particles 205 and the positively chargeable particles 206 are arranged between opposed substrates (transparent substrate 201 and opposed substrate 202). Under such a state, when a voltage is applied in such a manner that a side of the display electrode 203 becomes low potential and a side of the opposed electrode 204 becomes high potential, as shown in Fig. 19b, the positively chargeable particles 206 fly and move to the side of the display electrode 203 and the negatively chargeable particles 205 fly and move to the side of the opposed electrode 204 by means of Coulomb's force. In this case, a display face viewed from a side of the transparent substrate 201 looks like a color of the positively chargeable particles 206. Next, when a voltage is applied in such a manner that the side of the display electrode 203 becomes high potential and the side of the opposed electrode 204 becomes low potential by reversing potentials, as shown in Fig. 19c, the negatively chargeable particles 205 fly and move to the side of the display electrode 203 and the positively chargeable particles 206 fly and move to the side of the opposed electrode 204 by means of Coulomb's force. In this case, the display face viewed from the side of the transparent substrate 201 looks like a color of the negatively chargeable particles 205.

The display states shown in Figs. 19b and 19c are repeatedly changeable only by reversing the potentials of a power source, and thus it is possible to change colors on the display face reversibly by reversing the potentials of the power source as mentioned above.

The colors of the particles can be arbitrarily selected. For example, when the negatively chargeable particles 205 are white color and the positively chargeable particles 206 are black color, or, when the negatively chargeable particles 205 are black color and the positively chargeable particles 205 are white color, a reversible image display between white color and black color can be performed. In this method, since the particles are once adhered to the electrode by means of an imaging force, a display image can be maintained for a long time after a voltage apply is stopped, thereby showing an excellent memory property.

In the present invention, since the chargeable particles fly and move in the gas, the response speed of the image display is extremely fast and the response speed of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

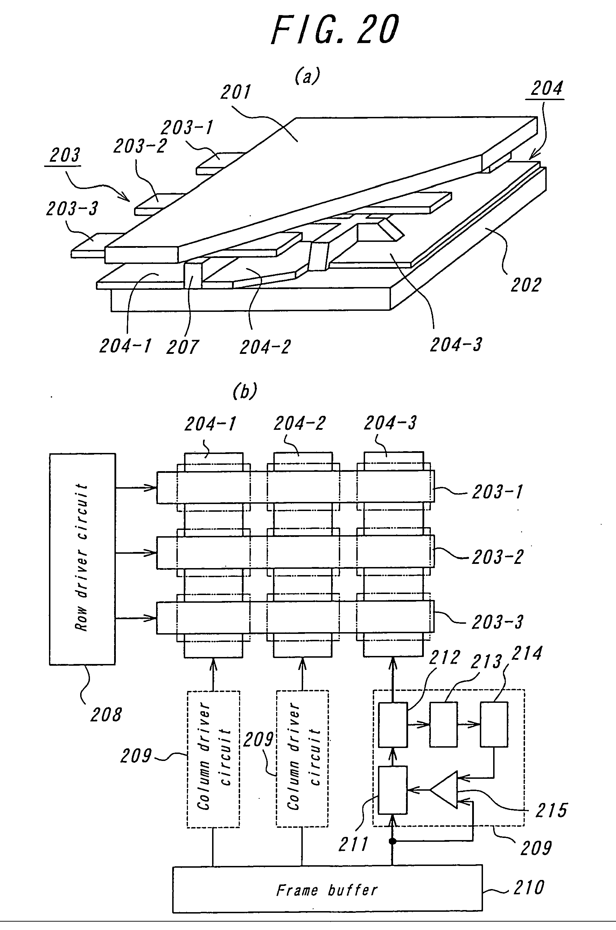

The image display device according to the third aspect of the invention is constructed by the image display panel in which the above image display elements are arranged in a matrix form. Figs. 20a and 20b are schematic views respectively showing one embodiment thereof. In this embodiment, 3x3 matrix is shown for convenience of explanation. When the number of the electrodes is n, it is possible to construct an arbitrary nxn matrix.

In the embodiment shown in Figs. 20a and 20b, display electrodes 203-1 to 203-3 arranged substantially in parallel with each other and opposed electrodes 204-1 to 204-3 arranged substantially in parallel with each other are provided respectively on the transparent substrate 201 and the opposed substrate 202 in such a manner that they are intersected with each other. A row driver circuit 208 is connected to the display electrodes 203-1 to 203-3 respectively. In the same way, a frame buffer 210 is connected to the opposed electrodes 204-1 to 204-3 respectively through a column driver circuit 209. As shown in Fig. 20b, respective column driver circuit 209 comprises voltage generation circuit 211, current/voltage conversion circuit 212, inversion current detector 213, integrator 214 and comparator 215. The column driver circuit 209 constructs a simple and inexpensive adjusting circuit for adjusting a voltage value of the gray level voltage applied between the electrodes.

The row driver circuit 208 connected to the display electrode side has a function for generating a scan signal for scanning successively the display electrodes 203-1 to 203-3. Moreover, the frame buffer 210 connected to the opposed electrode side has a function for outputting a gray level indication voltage on the selected opposed electrode to the column driver circuit 209. Further, the column driver circuit 209 has a function for outputting a gray level voltage corresponding to the input gray level indication voltage to the opposed electrode and a function for correcting a fly/move current as mentioned below. All the row driver circuit 208, the column driver circuit 209, and the frame buffer 210 construct a matrix drive circuit. In this embodiment, the 3x3 image display elements are constructed by isolating them by means of the partition walls 207, but the partition wall 207 is not an essential member and may be eliminated.

In a drive controlling with respect to the matrix electrode consisting of the display electrodes 203-1 to 203-3 and the opposed electrodes 204-1 to 204-3, an operation such that the 3x3 image display elements are displayed respectively one by one is performed by controlling operations of the row driver circuit 208, the column driver circuit 209 and the frame buffer 210 by means of a controlling of a sequencer (not shown) corresponding to the image to be displayed. This operation is basically same as that of the known one. In addition, according to the present invention, an operation for displaying a halftone image (gray level display) is performed.

In the case of the display electrode arranged on the transparent substrate, respective electrodes consisting of the matrix electrode is formed of electroconductive materials which are transparent and having pattern formation capability. As such electroconductive materials, metals such as aluminum, silver, nickel, copper, and gold, or transparent electroconductive metal oxides such as ITO, electroconductive tin oxide, and electroconductive zinc oxide formed in the shape of thin film by sputtering method, vacuum vapor deposition method, CVD (Chemical Vapor Deposition) method, and coating method, or coated materials obtained by applying the mixed solution of an electroconductive agent with a solvent or a synthetic resin binder are used.

Typical examples of the electroconductive material include cationic polyelectrolyte such as benzyltrimethylammonium chloride, tetrabutylammonium perchlorate, and so on, anionic polyelectrolyte such as polystyrenesulfonate, polyacrylate, and so on, or electro-conductive fine powders of zinc oxide, tin oxide, or indium oxide. Additionally, the thickness of the electrode may be suitable unless the electroconductivity is absent or any hindrance exists in optical transparency, and it is preferable to be 3 to 1000 nm, more preferable to be 5 to 400 nm. The foregoing transparent electrode materials can be employed as the opposed electrode, however, non-transparent electrode materials such as aluminum, silver, nickel, copper, and gold can be also employed.

It is preferred to arrange an insulation coating layer to respective electrodes so as not to leak an electric charge of the charged particles. As the coating layer, since it is difficult to leak an electric charge of the particles, it is most preferred to use positively chargeable resins with respect to the negatively chargeable particles or to use negatively chargeable resins with respect to the positively chargeable particles.

As the substrate, the particles and the partition wall constituting the image display device according to the third aspect of the invention, use may be made of the same members as those of the first aspect and the second aspect of the invention, and thus the explanations thereof are omitted here.

Hereinafter, an image writing method and an image reading-out method in the image display device according to the third aspect of the invention will be explained in this order. Firstly, one embodiment of the image writing method is as follows.

At first, an operation of the halftone display (gray level display) performed in the image display device according to the invention and a gray level indication voltage used in its operation will be explained. In the image display device according to the third aspect of the invention, a fly/move current is flown when the particles are flown and moved between the display electrode 203 and the opposed electrode 204. From this viewpoint, if an integral value of the fly/move current corresponding to a total amount of the charges of the particles actually flown and moved is obtained, it is possible to obtain an amount of the moved particles by comparing this integral value with an average amount of the charges of the particles measured preliminarily. If the thus obtained amount of the moved particles is divided by the electrode area, it is possible to obtain a particle density per a unit area. Then, a display density can be obtained by an optical calculation based on the thus obtained particle density. In this case, the display density may be measured actually instead of the optical calculation.

In view of the above explanations, in the image display device according to the third aspect of the invention, data obtained by preliminarily mapping a relation between the display density on the electrode area used actually and the integral value of the fly/move current are stored in the frame buffer 210 shown in Fig. 20b. As the mapping data, use is made of data of the gray level indication voltage in which it is preliminarily determined that the integral value of the fly/move current generated when the particle flying and moving corresponds to the display density of target gray level.

Therefore, when the halftone display is performed in the image display device according to the third aspect of the invention, since the integral value of the fly/move current is controlled to be the display density value corresponding to the target gray level by outputting the gray level indication voltage corresponding to the gray level of the pixel to be displayed from the frame buffer 210 to the voltage generation circuit 211 of the column driver circuit 209; generating the gray level voltage from the voltage generation circuit 211 in response to the gray level indication voltage; and outputting a current obtained by converting the gray level voltage by means of the current/voltage conversion circuit 212 to the electrode, it is possible to display the desired half tone density with an excellent reproducibility.

Moreover, in the driver circuit 209 shown in Fig. 20b, since the feed back operation is performed by detecting the fly/move current output from the current/voltage conversion circuit 212 by the inversion current detector 213; integrating the fly/move current by the integrator 214; and comparing the thus obtained integral value with the gray level indication voltage input from the frame buffer 210 by the comparator 215, a deviation between the integral value of the fly/move current and the gray level indication voltage corresponding to the gray level mentioned above can be corrected, and thus it is possible to further improve the reproducibility when the image displaying.

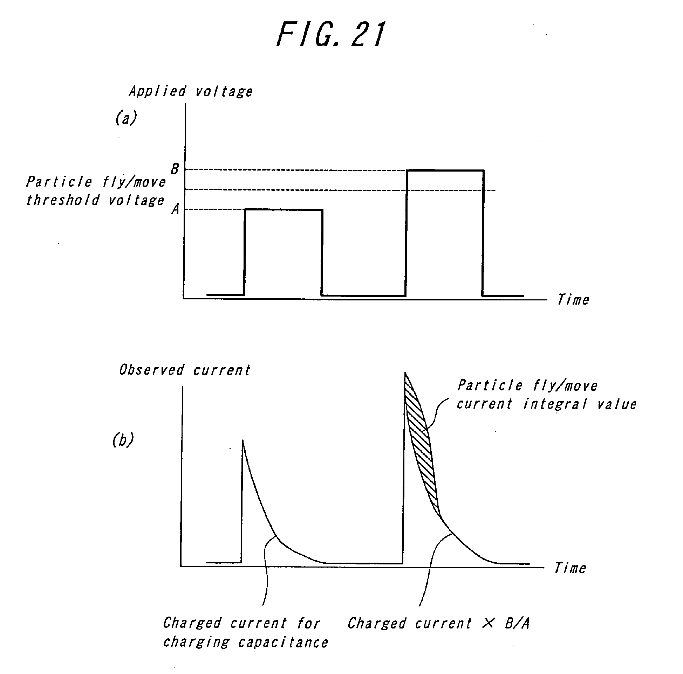

Then, the method for correcting a fly/move current in the halftone image display (gray level display) performed in the third aspect of the invention will be explained with reference to Figs. 21a and 21b.

Figs. 21a and 21b are schematic views respectively explaining the method of correcting the fly/move current when the halftone image display is performed in the image display device according to the third aspect of the invention. In this embodiment, it is considered that, when a voltage is applied between the electrodes of the image display panel of the image display device, a fly/move current due to a particle fly/move motion and also a charged current for charging capacitance between the electrodes are flown. Therefore, a current flowing when the voltage is applied between the electrodes is simply observed, and then an observed voltage calculated by summing the fly/move current and the charged current is obtained.

Since the charged current is preliminarily obtained by a calculation utilizing an electrode distance, a gas charged between the electrodes, a dielectric constant of the particles and so on, it is possible to obtain the fly/move current from the observed current value by utilizing such calculation value. However, if the calculation value is used as it is, it is not possible to correct a variation of a display density in the case that a variation of the charged current waveform is generated by a variation of a cell gap between the electrodes in the image display panel.

Therefore, in this embodiment, with respect to the current pixel to be displayed and the pixels adjacent to the current pixel, as shown in Fig. 21a, a first current waveform (current waveform shown in left side of Fig. 21b) that is the charged current generating when a voltage A having a voltage value less than a particle fly/move threshold voltage, and a second current waveform (current waveform shown in right side of Fig. 21b) that is the observed current generating when a voltage B having a voltage value larger than the particle fly/move threshold voltage are observed, and the observed current waveform is corrected on the basis of the charged current waveform. Specifically, the fly/move current after correction is obtained by calculating (fly/move current)=(observed current) - (charged current x B/A) with the use of the applied voltage corresponding to a desired halftone image to be actually displayed as the voltage B. In this case, the correction is performed on the basis of an integral value of the particle fly/move current.

In this manner, when the halftone image display is performed in the image display device according to the invention, the current waveform utilized for the calculation of the fly/move current is optimized, and thus it is possible to correct the variation of the display density.

In the example mentioned above, the halftone image display is realized by adjusting the voltage value applied between the electrodes. However, instead of the adjustment of the voltage value mentioned above, one or more objects of waveform, applied period and applied number of the voltage applied between the electrodes may be adjusted.

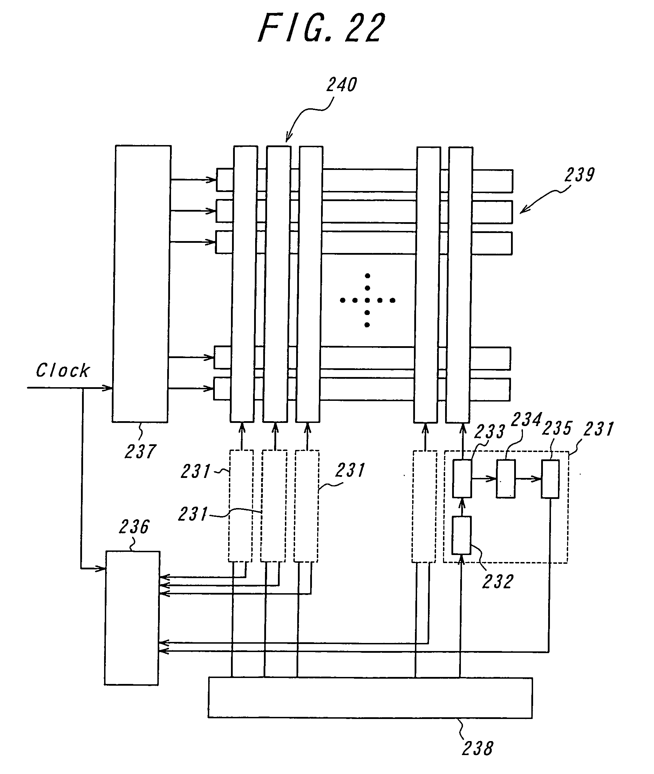

Then, the image read-out operation of the image formed in the above manner, that is the most important feature of the invention, will be explained. Fig. 22 is a schematic view explaining an image state read-out operation of the image display device according to the third aspect of the invention. In the embodiment shown in Fig. 22, an nxn matrix that is different from the embodiment explaining the image writing operation is explained. In the embodiment mentioned above, numeral 231 is a column driver circuit, numeral 232 is a voltage generation circuit, numeral 233 is a current/voltage conversion circuit, numeral 234 is an inversion current detector, numeral 235 is an integrator, numeral 236 is an A/D conversion circuit, numeral 237 is a row driver circuit, numeral 238 is a frame buffer, numeral 239 is a scan electrode and numeral 240 is a data electrode. Constructions of the scan electrode 239 and the data electrode 240 corresponding to the embodiments explained in the image writing operation mentioned above.

The matrix electrode is constructed as shown in Fig. 22, and the data electrode 240 is connected to the current/voltage conversion circuit 233 for detecting the fly/move current in addition to the column driver 231. The detected fly/move current is integrated by the integrator 235, and the integrated value is converted into digital data by the A/D conversion circuit 236, which is supplied to CPU not shown. In this embodiment, it is assumed that the image is formed preliminarily by the image writing operation in the image display device in which the white and black particles are filled into respective pixels defined by the partition wall 207 as shown in Fig. 20a, and the image is maintained by using the image maintaining property. In the image display device according to the invention that is under the condition mentioned above, the read-out operation of the display image information is as follows.

At first, a black solid image (overall black) is written.

The passive matrix drive is constructed in the same manner as that of the known one. In this case, the integrated value, which is obtained by integrating the current supplied from the column driver 231 to the data electrode 240 when the respective images is formed, is converted into the digital value by means of the A/D conversion circuit 236 corresponding to a timing (clock) for scanning the respective scan electrode by means of the row driver circuit 236. Then, the operation mentioned above is repeated until the scanning operation of the scan electrode 239 is finished for one image. During the image writing operation mentioned above, the value obtained by integrating the fly/move current flowing when the black color is displayed on the respective pixels corresponds to "non-blackness" i.e. "whiteness" of the respective pixels. Therefore, the image density of the respective pixels can be read-out along the overall surface as the digital value.

Further, if the same operation is applied to a white solid image (overall white), it is possible to read-out "non-whiteness" i.e. "blackness" of the respective pixels. Theoretically, if once one of the image writing operations of the white solid image and the black solid image is performed, it is possible to read-out the image display state. However, if the same operations are performed with respect to both images, it is possible to achieve the image display state read-out operation with more reproducibly by comparing the data for the white solid image and the black solid image. In this case, if the image display state is read-out, the display image is the black solid image or the white solid image. Therefore, according to need, the image formation is performed on the basis of the preliminarily obtained image display state.

In this embodiment, as is the same as the image writing operation mentioned above, it is preferred to take the following aspects into consideration. At first, the image display state that is changed by the image read-out operation mentioned above can be reproduced by performing the re-writing operation on the basis of the read-out image information. In this case, it is not necessary to rewrite the image display state as the same read-out image display state. For example, if the deterioration with age of the image display state is preliminarily known, the image display state may be reproduced to the image display state corrected on the basis of the deterioration with age.

Moreover, a current flowing when the voltage is applied between the electrodes of the image display panel includes not only the fly/move current flowing due to the fly and movement of the particles but also a charge current for charging a capacitance between the electrodes. Therefore, if the current flowing when the voltage is applied between the electrodes is simply measured, a sum of the fly /move current and the charge current can be obtained. Since a waveform of the charge current can be preliminarily calculated by utilizing a distance between the electrodes and a dielectric constant of the gas and particles filled between the electrodes, a waveform of the fly/move current may be calculated from the observed current value by utilizing the thus obtained preliminarily calculated value.

However, in the case that the waveform of the charge current itself is deviated due to a variation of cell gap in the panel plane, it is not possible to correct a deviation of the image density completely by the method mentioned above. In order to improve this problem, the following method is conceivable such that a voltage below the threshold voltage at which the particles start to fly is applied to a target pixel itself or the pixels adjacent to the target pixel, a current following at this time is assumed to be the charge current, and the fly/move current is calculated from a formula: (measured current) - Ax(charge current) = (fly/move current); (here, A is a ratio between the applied voltage used when only the charge current is observed and the applied voltage used when actually the halftone display is performed).

In the image display device according to the third aspect of the invention explained above, the image with halftone density is displayed on respective pixels and the image display device has a memory property such that the halftone density is read-out. In this case, if for example 0 - 255 halftone densities can be displayed, it is possible to use respective one pixel as 1 byte memory. Moreover, in this embodiment, the explanation is performed such that the image display image has the memory property, but it is possible to construct an image regulation device utilizing only the memory property.

In this case, it is not necessary to use the transparent substrate.

Hereinafter, the image display device according to the first aspect and the second aspect of the invention will be explained in detail with reference to the actual examples, but the present invention is not limited to the following examples.

<Experiment 1 (first embodiment of the first aspect of the invention)>

In the image display device according to the first embodiment of the first aspect of the invention having the construction mentioned above, in order to examine the relation between the maximum average particle size R of the particles and the micro-concave portions and/or the micro-convex portions, the image display devices according to the examples 1 - 6 were prepared, wherein the micro-concave portions having a shape and an arrangement shown in the following Table 1 with average width W, average height (depth) H and average interval I shown in the following Table 1 were provided to one electrode, and, wherein substrate interval D and maximum average particle size R of the particles were adjusted in the manner shown in the following Table 1. With respect to the thus prepared image display devices according to the examples 1 - 6, the estimation was performed in such a manner that a rectangular waveform of 4 (kV/mm) was applied for 10 minutes by 1 (Hz) and then for 30 minutes by 10 (Hz), the image deterioration rate due to the particle agglutination was observed by naked eyes during the repeated inversion operation by 1 (Hz) after that. In Table 1, symbol "◎" showed a case wherein no image deterioration was detected, symbol "○" illustrated a case wherein image deterioration was not detected as such, symbol "Δ" depicted a case wherein image deterioration was partly detected but it is no problem on the actual use.

From the results shown in Table 1, the thus obtained estimation results and relations of W/R, H/R and I/R were investigated. Then, it was understood that it is preferred to set W/R to 2 or more, to set H/R to 2 or more and to set I/R to 50 or less.

In the above examples, the electrodes are arranged on the substrates. However, in order to achieve the present invention, it is not necessary to always arrange the electrodes on the substrates if the electrodes for generating the electric field are existent. Therefore, it is possible to arrange the electrodes apart from the substrates.

<Experiment 2 (second embodiment of the first aspect of the invention)>

In the image display device according to the second embodiment of the first aspect of the invention having the construction mentioned above, in order to examine the relation between the maximum average size R that is the maximum value among the average particle sizes for two or more kinds of the particles and the micro-cutout holes, the image display devices according to the examples 11 - 16 were prepared, wherein the micro-cutout holes having a shape and an arrangement shown in the following Table 2 with average width W and average interval I shown in the following Table 2 were provided to one electrode, and, wherein substrate interval d and maximum average particle size R of the particles were adjusted in the manner shown in the following Table 2. With respect to the thus prepared image display devices according to the examples 11 - 16, the estimation was performed in such a manner that a rectangular waveform of 4 (kV/mm) was applied for 10 minutes by 1 (Hz) and then for 30 minutes by 10 (Hz), the image deterioration rate due to the particle agglutination was observed by naked eyes during the repeated inversion operation by 1 (Hz) after that. In Table 2, symbol "◎" showed a case wherein no image deterioration was detected, symbol "○" illustrated a case wherein image deterioration was not detected as such, symbol "Δ" depicted a case wherein image deterioration was partly detected but it is no problem on the actual use.

From the results shown in Table 2, the relation between the average width H and the maximum average particle size R and the relation between the average interval I and the maximum average particle size R were investigated.

Then, it was understood that it is preferred to set W/R to 10 or more and to set I/R to 50 or less.

In the above examples, the electrodes are arranged on the substrates. However, in order to achieve the present invention, it is not necessary to always arrange the electrodes on the substrates if the electrodes for generating the electric field are existent. Therefore, it is possible to arrange the electrodes apart from the substrates.

<Experiment 3 (first embodiment of the second aspect of the invention)>

With respect to respective examples and comparative examples, properties of the particle and functional estimations of the image display device were measured and estimated as follows.

(1) Volume resistance of the insulation member (resin) for coating

The insulation member (resin) for coating was coated to the copper plate, and the measurement was performed according to JIS H 0505-1975.

(2) Charge potential of the insulation member (resin) for coating

A sample for measuring a charge decreasing property was produced by casting only the insulation member (resin) for coating separately. Then, by using CRT2000 apparatus manufactured by QEA, the surface potential, in the case that the surface of the particles was charged by a generation of Corona discharge caused by applying a voltage of 8 kV to a Corona discharge device deployed at a distance of 1 mm from the surface, is measured at 0.3 second after the Corona discharge. In this case, the measurement condition was a temperature of 22˚C and a humidity of 50 RH%.

(3) Water content of the particle for the image display

By utilizing Karl Fischer apparatus, water content of the particle in the image display device was measured.

(4) Solvent insoluble rate

The particle for the image display was immersed into MEK solvent for 24 hours at 25˚C and was dried for 5 hours at 100˚C. After that, a weight of the particle was measured. The solvent insoluble rate was measured according to the following formula on the basis of a weight deviation of the particle before and after the immersion:

$$\text{solvent insoluble rate } (\%) = (B/A) \times 100;$$

(here, A is a weight of the particle before being immersed into the solvent and B is a weight of particle after the particle is immersed into good solvent at 25˚C for 24 hours).

(5) Particle size distribution and particle size of the particle

Respective particle was installed in Mastersizer 2000 apparatus (Malvern Instruments Ltd.) and the particle size distribution Span was obtained from the following formula by utilizing attached software (software for calculating the particle size distribution and the particle size on the basis of a volume standard distribution):

$$\text{Span} = (d(0.9) - d(0.1))/d(0.5) ;$$

(here, d(0.5) means a value of the particle size expressed by $\mu$m wherein an amount of the particles having the particle size larger than or smaller than this value is 50%, d(0.1) means a value of the particle size expressed by $\mu$m wherein an amount of the particles having the particle size smaller than this value is 10%, and d(0.9) means a value of the particle size expressed by $\mu$m wherein an amount of the particles having the particle size smaller than this value is 90%).

(6) Functional estimation of the image display device

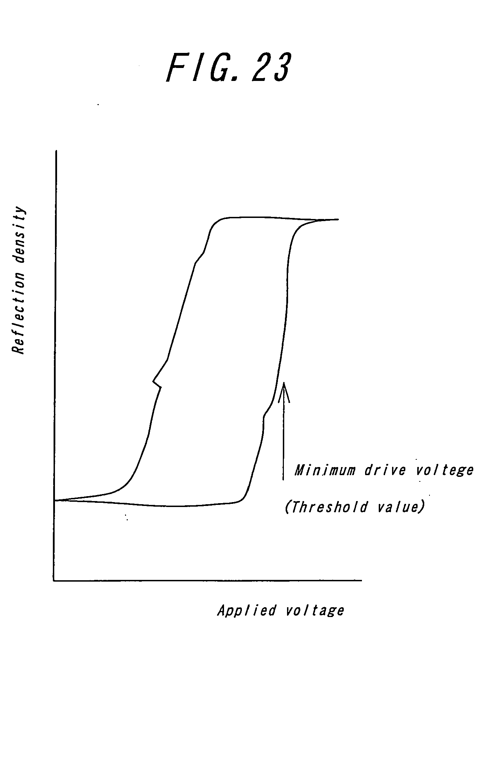

With respect to the manufactured image display device, the measurement was performed by increasing the applied voltage and a voltage at which the particle started to move so as to display the image was assumed to a minimum drive voltage. Specifically, a voltage at threshold value shown in Fig. 23 was assumed to be the minimum drive voltage.

Then, a voltage of the minimum drive voltage +10 V was applied and a potential was inverted, so that a display of black color-white color was repeated.

The estimation of the display function was performed by measuring initial contrast ratio, contrast ratio after 10000 times repetition and contrast ration after 5 days left by utilizing a reflection image densitometer. Here, the contrast ratio is obtained from the formula: contrast ratio = reflection density at black color display/ reflection density at white color display. For reference, contrast ratio maintaining rates were measured at after 10000 times repetition and after 5 days left with respect to the initial contrast ratio.

(Example 21)

The image display device was manufactured as follows.

(A) Formation of the insulation thin film

At first, fluorocarbon resin: LF710N (ASAHI GLASS CO., LTD.) was coated on a glass substrate having a thickness of about 500 Å so as to form the insulation thin film having a thickness of 1.0 $\mu$m.

(B) Formation of the partition wall

As an inorganic powder, a glass powder was prepared by melting, cooling and grinding a mixture of $SiO_2$, $Al_2O_3$, $B_2O_3$, $Bi_2O_3$, and ZnO. As a resin, epoxy resin having heat hardening property was prepared. Then, the glass powder and the epoxy resin were mixed with a solvent and controlled to be a viscosity of 12000 cps, so that a paste was produced. Then, the paste was applied on the substrate on which the insulation thin film was formed according to the above (A) step and heated at 150°C to be hardened. By repeating the above paste applying and heating steps, a thickness (corresponding to a height of the partition wall) was controlled to be 200 $\mu$m. Then, a dry photo-resist was adhered. With respect to the adhered dry photo-resist, an exposing step and an etching step were performed so as to form a mask by which a partition wall pattern having a line of 50 $\mu$m, a space of 200 $\mu$m and a pitch of 250 $\mu$m can be formed. Then, unnecessary portions were removed by a sandblast to form a predetermined partition wall having a stripe shape.

(C) Production of the image display device

The particle A for the image display was produced in such a manner that acrylic urethane resin: EAU65B (Asia Industry Co., Ltd.)/ IPDI cross-linking agent: Excel-Hardener HX (Asia Industry Co., Ltd.), CB (Carbon Black) 4 phr, charge control agent: BontronN07 (Orient Chemical Industries Ltd.) 2 phr (here, phr means parts by weight with respect to 100 parts by weight of resin) were added, mixed, ground and classified by a jet-mill.

The particle B for the image display was produced in such a manner that acrylic urethane resin: EAU204B (Asia Industry Co., Ltd.) / IPDI cross-linking agent: Excel-Hardener HX (Asia Industry Co., Ltd.), titanium oxide 10 phr, charge control agent: BontronE89 (Asia Industry Co., Ltd.) 2 phr were added, mixed, ground and classified by the jet-mill.

Then, a pair of the glass substrates, on which indium oxide electrode having a thickness of about 500 Å and the partition wall formed according to the above (B) step were arranged, was assembled in such a manner that an interval between the substrates was controlled to be 400 $\mu$m by using a spacer. Then, the particle A and the particle B were filled in a space between the glass substrates, and a peripheral portion of the glass substrates was connected by epoxy adhesive so as to seal the particles, so that the image display device was produced.

The mixing ration of the particle A and the particle B was controlled to be even, and the filling rate (volume occupying rate) of the particle between the glass substrates was controlled to be 20 vol%.

Moreover, the gas filling the space in the image display device was an air having a relative humidity of 40 %RH.

Results of the properties of the insulation member, the properties of the particle and the functional estimation of the image display device according to the above (1) - (6) steps are shown in Table 3.

(Example 22)

The image display device was produced in the same manner as that of the example 21, except that methyl methacrylate (90 wt%) and perfluoro octyl ethyl methacrylate (10 wt%) were coated by a roll-coater and UV hardened to form a coating having a thickness of 800 nm on the glass substrate on which iridium oxide electrode having a thickness of about 500 Å, in spite of the fluorocarbon resin coating.

Results of the properties of the insulation member, the properties of the particle and the functional estimation of the image display device according to the above (1) - (6) steps are shown in Table 3.

(Example 23)

The image display device was produced in the same manner as that of the example 21, except that $SiO_2$ was sputtered to form a coating having a thickness of 200 nm on the glass substrate on which iridium oxide electrode having a thickness of about 500 Å, in spite of the fluorocarbon resin coating.

Results of the properties of the insulation member, the properties of the particle and the functional estimation of the image display device according to the above (1) - (6) steps are shown in Table 3.

(Example 24)

The image display device was produced in the same manner as that of the example 21, except that $C_3F_6$ was plasma-polymerized to form a coating having a thickness of 1.5 $\mu$m on the glass substrate on which iridium oxide electrode having a thickness of about 500 Å, in spite of the fluorocarbon resin coating.

Results of the properties of the insulation member, the properties of the particle and the functional estimation of the image display device according to the above (1) - (6) steps are shown in Table 3.

(Example 25)

The image display device was produced in the same manner as that of the example 21, except that fluorocarbon resin: KYNAR2500 (ATOFINA JAPAN) was coated to form a coating having a thickness of 3.0 $\mu$m on the glass substrate on which iridium oxide electrode having a thickness of about 500 Å, in spite of the fluorocarbon resin: LF710N coating.

Results of the properties of the insulation member, the properties of the particle and the functional estimation of the image display device according to the above (1) - (6) steps are shown in Table 3.

In this example, as resin use is made of the same type fluorocarbon resin, but, since a charge decreasing rate is larger, the contrast maintaining ratio is slightly decreased on the display function estimation.

(Example 26)

The image display device was produced in the same manner as that of the example 21, except that a grinding condition during the particles A and B producing method was changed so as to vary Span of the particles.

Results of the properties of the insulation member, the properties of the particle and the functional estimation of the image display device according to the above (1) - (6) steps are shown in Table 3.

In this example, since Span of the particles is larger, the durability is slightly decreased on the display function estimation.

(Example 27)

The image display device was produced in the same manner as that of the example 21, except that the partition wall was not provided.

Results of the properties of the insulation member, the properties of the particle and the functional estimation of the image display device according to the above (1) - (6) steps are shown in Table 3.

In this example, since there is no partition wall, the durability is slightly decreased on the display function estimation.

(Comparative example 1)

The image display device was produced in the same manner as that of the example 21, except that the insulation thin film coating was not provided on the substrate.

Results of the properties of the insulation member, the properties of the particle and the functional estimation of the image display device according to the above (1) - (6) steps are shown in Table 3.

In this comparative example, since the substrate is not coated by the insulation member, the drive voltage is drastically deteriorated.

[table 3]

| | | Example 21 | Example 22 | Example 23 | Example 24 | Example 25 | Example 26 | Example 27 | Comparative Example 1 |
|---|---|---|---|---|---|---|---|---|---|
| Particles A | resin | EAU53B/HX | EAU53B/HX | EAU53B/HX | EAU53B/HX | EAU53B/HX | EAU53B/HX | EAU53B/HX | EAU53B/HX |
| | additives | CB bontron N07 | CB bontron N07 | CB bontron N07 | CB bontron N07 | CB bontron N07 | CB bontron N07 | CB bontron N07 | CB bontron N07 |
| | water content | 2.1 wt% | 2.1 wt% | 2.1 wt% | 2.1 wt% | 2.1 wt% | 2.1 wt% | 2.1 wt% | 2.1 wt% |
| | insoluble rate | 87% | 87% | 87% | 87% | 87% | 87% | 87% | 87% |
| | Span | 1.2 | 1.2 | 1.2 | 1.2 | 1.2 | 1.2 | 1.2 | 1.2 |
| Particles B | resin | EAU204/HX | EAU204/HX | EAU204/HX | EAU204/HX | EAU204/HX | EAU204/HX | EAU204/HX | EAU204/HX |
| | additives | $TiO_2$ bontron E89 | $TiO_2$ bontron E89 | $TiO_2$ bontron E89 | $TiO_2$ bontron E89 | $TiO_2$ bontron E89 | $TiO_2$ bontron E89 | $TiO_2$ bontron E89 | $TiO_2$ bontron E89 |
| | water content | 2.1 wt% | 2.1 wt% | 2.1 wt% | 2.1 wt% | 2.1 wt% | 2.1 wt% | 2.1 wt% | 2.1 wt% |
| | insoluble rate | 87% | 87% | 87% | 87% | 87% | 87% | 87% | 87% |
| | Span | 1.5 | 1.5 | 1.5 | 1.5 | 1.5 | 6.1 | 1.5 | 1.5 |
| Insulation tin film to substrate | insulation material | LF710N | acryl including fluorosis | $SiO_2$ sputter | fluorine compound plasma | KYNAR 2500 | LF710N | LF710N | none |
| | film thickness [$\mu$m] | 1.5 | 0.8 | 0.2 | 1.5 | 3 | 1.5 | 1.5 | - |
| | volume resistivity [$\Omega\cdot$cm] | $1.2\times10^{15}$ | $2.5\times10^{14}$ | $5.2\times10^{15}$ | $3.7\times10^{14}$ | $1.3\times10^{13}$ | $1.2\times10^{15}$ | $1.2\times10^{15}$ | - |
| | charge potential (V) | 760 | 760 | 760 | 760 | 760 | 760 | 760 | - |
| Gas relative humidity used in gap (%RH) | | 40 | 40 | 40 | 40 | 40 | 40 | 40 | 40 |
| Partition wall | | existent | existent | existent | existent | existent | none | existent | existent |

(continued)

| | | Example 21 | Example 22 | Example 23 | Example 24 | Example 25 | Example 26 | Example 27 | Comparative Example 1 |
|---|---|---|---|---|---|---|---|---|---|
| Estimation of display function | minimum drive voltage (V) | 15 | 15 | 13 | 20 | 38 | 22 | 15 | 250 |
| | initial contrast ratio | 8.7 | 8.8 | 8.6 | 8.5 | 8.9 | 8.7 | 8.8 | 9.2 |
| | contrast ratio after 10000 times (maintaining rate) | 7.83 (83%) | 7.91 (90%) | 8.1 (94%) | 7.92 (93%) | 7.83 (88%) | 6.96 (80%) | 7.13 (81%) | 8.28 (90%) |
| | contrast ratio after 5days left (maintaining rate) | 7.40 (85%) | 7.70 (87%) | 7.80 (91%) | 7.51 (91%) | 6.14 (69%) | 6.18 (71%) | 7.39 (84%) | 7.73 (84%) |

<Experiment 4 (second embodiment of the second aspect of the invention)>

In respective example, comparative example and reference example, the properties of the insulation member, the properties of the particle and the functional estimation of the image display device were measured and estimated as follows.

(Estimation method)

1. Surface roughness of the substrate

Arithmetic average roughness (Ra) and concave-convex average distance (Sm) were measured by an atomic force microscope ("AFM" Seiko Instruments Inc.).

2. Solid state properties of the particle

(1) Water content of the particle

The water content of the particle was measured by using the Karl Fischer apparatus ("VA-US" Mitsubishi Engineering-Plastics Corporation).

(2) Solvent insoluble rate (Nd)

The particle was immersed into methyl ethyl ketone solvent for 24 hours at 25˚C and was dried for 5 hours at 100˚C. After that, a weight of the particle was measured. The solvent insoluble rate was measured according to the following formula (IV) on the basis of a weight deviation of the particle before and after the immersion:

$$\mathrm{Nd}\ (\%) = (\mathrm{B/A}) \times 100 \qquad (\mathrm{IV});$$

(here, A is a weight of the particle before being immersed into the solvent and B is a weight of particle after the particle is immersed into good solvent at 25˚C for 24 hours).

(3) Particle size distribution and particle size

Respective particle was installed in Mastersizer 2000 apparatus (Malvern Instruments Ltd.), particle size d (0.1), d(0.5) and d(0.9) were measured and the particle size distribution Span was obtained from the following formula (III) by utilizing attached software (software for calculating the particle size distribution and the particle size on the basis of a volume standard distribution):

$$\mathrm{Span} = (\mathrm{d}(0.9) - \mathrm{d}(0.1))/\mathrm{d}(0.5) \qquad (\mathrm{III});$$

(here, d(0.5) means a value of the particle size expressed by $\mu$m wherein an amount of the particles having the particle size larger than or smaller than this value is 50%, d(0.1) means a value of the particle size expressed by $\mu$m wherein an amount of the particles having the particle size smaller than this value is 10%, and d(0.9) means a value of the particle size expressed by $\mu$m wherein an amount of the particles having the particle size smaller than this value is 90%).

3. Estimation of the display function

(1) Minimum drive voltage

With respect to the manufactured image display device, the measurement was performed by increasing the applied voltage and a voltage at which the particle started to move so as to display the image, specifically, a voltage at threshold value shown in Fig. 23 was assumed to be the minimum drive voltage.

(2) Contrast ratio

A voltage of the minimum drive voltage +10 V was applied and a potential was inverted, so that a display of black color - white color was repeated. Reflection densities at the initial time, after 10,000 times repetition and after 5 days left were measured by utilizing the reflection image densitometer ("D19C" GretagMacbeth Inc.). Here, the contrast ratio is obtained from the formula: contrast ratio = reflection density at black color display/ reflection density at white color display. For reference, contrast ratio maintaining rates were measured at after 10000 times repetition and after 5 days left with respect to the initial contrast ratio.

(Production of the particle for the image display)

Two kinds of the particles A and B were produced as follows. (1) Particle A; The particle A for the image display was produced in such a manner that acrylic urethane resin: EAU65B (Asia Industry Co., Ltd.)/IPDI cross-linking agent: Excel-Hardener HX (Asia Industry Co., Ltd.), CB (Carbon Black) 4 phr, charge control agent: BontronN07 (Orient Chemical Industries Ltd.) 2 phr (here, phr means parts by weight with respect to 100 parts by weight of resin) were added, mixed, ground and classified by a jet-mill.
(2) Particle B; The particle B for the image display was produced in such a manner that acrylic urethane resin: EAU204B (Asia Industry Co., Ltd.)/IPDI cross-linking agent: Excel-Hardener HX (Asia Industry Co., Ltd.), titanium oxide 10 phr, charge control agent: BontronE89 (Asia Industry Co., Ltd.) 2 phr were added, mixed, ground and classified by the jet-mill.

(Example 31)

On a glass substrate having a thickness of 110 $\mu$m with the electrode to which indium oxide having a thickness of about 500 Å was arranged by sputtering, a rib having a height of 200 $\mu$m was produced to form a partition wall having a stripe shape. The production of the rib was performed as follows. A glass powder prepared by melting, cooling and grinding a mixture of SiOz, Al$_2$O$_3$, B$_2$O$_3$, Bi$_2$O$_3$, and ZnO and an epoxy resin having heat hardening property were mixed with a solvent and controlled to be a viscosity of 12,000 cps, so that a paste was produced. Then, the paste was applied on a substrate and heated at 150°C to be hardened. By repeating the above paste applying and heating steps, a thickness (corresponding to a height of the partition wall) was controlled to be 200 $\mu$m.
Then, a dry photo-resist was adhered. With respect to the adhered dry photo-resist, an exposing step and an etching step were performed so as to form a mask by which a partition wall pattern having a line of 50 $\mu$m, a space of 200 $\mu$m and a pitch of 250 $\mu$m can be formed. Then, unnecessary portions were removed by a sandblast to form a predetermined partition wall having a stripe shape.
The arithmetic average roughness (Ra) and the concave-convex average distance (Sm) of the substrate surface to which the particle was contacted were shown in Table 4.
Then, a pair of the glass substrates was assembled in such a manner that an interval between the substrates was controlled to be 400 $\mu$m by using a spacer. Then, the particles A and the particles B having d(0.5) of 6 $\mu$m were filled in a space between the glass substrates, and a peripheral portion of the glass substrates was connected by epoxy adhesive so as to seal the particles, so that the image display device was produced. The mixing ration of the particles A and the particles B was controlled to be even, and the filling rate of the particles between the glass substrates was controlled to be 20 vol%. Moreover, the gas filling the space in the image display device was an air having a relative humidity of 40 %RH.
Results of the measured minimum drive voltage and the contrast ratio are shown in Table 4.

(Examples 32, 33 and comparative examples 11, 12)

The image display device was produced in the same manner as that of the example 31, except that the arithmetic average roughness (Ra) and the concave-convex average distance (Sm) were varied as shown in Table 4 by varying the sputtering condition. Results of the measured minimum drive voltage and the contrast ratio are shown in Table 4.

(Reference example 1)

The image display device was produced in the same manner as that of the example 31, except that the particle size distribution Span was varied as shown in Table 4 by varying the grinding condition during the particle producing step. Results of the measured minimum drive voltage and the contrast ratio are shown in Table 4.

(Reference example 2)

The image display device was produced in the same manner as that of the example 31, except that the partition wall was not formed. Results of the measured minimum drive voltage and the contrast ratio are shown in Table 4.

(Examples 34, 35 and comparative example 13)

The image display device was produced in the same manner as that of the example 31, except that d (0.5) values of the particles A and B were 20 $\mu$m and the arithmetic average roughness (Ra) and the concave-convex average distance (Sm) were varied as shown in Table 4. Results of the measured minimum drive voltage and the contrast ratio are shown in Table 4.

(Example 36)

The image display device was produced in the same manner as that of the example 34, except that fluorocarbon resin: LF710N (ASAHI GLASS CO., LTD.) including silica fine particles: SS20 (Japan Silica Ltd.) was coated further on the substrate by using a roll coater so as to form the coating having a thickness of 1 $\mu$m. Results of the measured minimum drive voltage and the contrast ratio are shown in Table 4.

(Comparative example 14)

The image display device was produced in the same manner as that of the example 34, except that fluorocarbon resin: LF710N (ASAHI GLASS CO., LTD.) was coated on the substrate by using a roll-coater so as to form the coating having a thickness of 1 $\mu$m. Results of the measured minimum drive voltage and the contrast ratio are shown in Table 4.

[Table 4-1]

| | | Example 31 | Example 32 | Example 33 | Comparative Example 11 | Comparative Example 12 | Comparative Example 1 |
|---|---|---|---|---|---|---|---|
| Particles A | resin | EAU53B/HX | EAU53B/HX | EAU53B/HX | EAU53B/HX | EAU53B/HX | EAU53B/HX |
| | additives | CB bontron N07 | CB bontron N07 | CB bontron N07 | CB bontron N07 | CB bontron N07 | CB bontron N07 |
| | water content | 2.10% | 2.10% | 2.10% | 2.10% | 2.10% | 2.10% |
| | solvent insoluble rate | 87% | 87% | 87% | 87% | 87% | 87% |
| | d(0.5)($\mu$m) | 6 | 6 | 6 | 6 | 6 | 6 |
| | Span | 1.2 | 1.2 | 1.2 | 1.2 | 1.2 | 1.2 |
| Particles B | resin | EAU204B/HX | EAU204B/HX | EAU204B/HX | EAU204B/HX | EAU204B/HX | EAU204B/HX |
| | additives | $TiO_2$, BONTRON E89 | $TiO_2$, BONTRON E89 | $TiO_2$, BONTRON E89 | $TiO_2$, BONTRON E89 | $TiO_2$, BONTRON E89 | $TiO_2$, BONTRON E89 |
| | water content | 2.10% | 2.10% | 2.10% | 2.10% | 2.10% | 2.10% |
| | solvent insoluble rat | 87% | 87% | 87% | 87% | 87% | 87% |
| | d(0.5)($\mu$m) | 6 | 6 | 6 | 6 | 6 | 6 |
| | Span | 1.5 | 1.5 | 1.5 | 1.5 | 1.5 | 6.1 |
| Substrate propertie | outermost surface | ITO | ITO | ITO | ITO | ITO | ITO |
| | RA [nm] | 100 | 200 | 200 | 40 | 800 | 200 |
| | Sm [nm] | 100 | 200 | 500 | 10 | 700 | 200 |
| Gas relative humidity used in gap (%RH) | | 40 | 40 | 40 | 40 | 40 | 40 |
| Partition wall | | existent | existent | existent | existent | existent | existent |

(continued)

| | | Example 31 | Example 32 | Example 33 | Comparative Example 11 | Comparative Example 12 | Comparative Example 1 |
|---|---|---|---|---|---|---|---|
| Display function | minimum drive voltage (V) | 120 | 100 | 60 | 220 | 230 | 100 |
| | initial contrast ratio | 8.70 | 8.80 | 8.80 | 8.50 | 7.80 | 8.80 |
| | contrast ratio after 10000 times (maintaining rate) | 7.85 (90%) | 7.85 (90%) | 7.81 (90%) | 7.92 (93%) | 7.28 (93%) | 7.13 (81%) |
| | contrast ratio after 5days left (maintaining rate) | 7.40 (85%) | 7.60 (87%) | 7.60 (87%) | 7.51 (88%) | 6.93 (88%) | 6.05 (69%) |

[Table 4-2]

| | | Reference Example 2 | Example 34 | Example 35 | Comparative Example 13 | Example 36 | Comparative Example 14 |
|---|---|---|---|---|---|---|---|
| Particles A | resin | EAU53B/HX | EAU53B/HX | EAU53B/HX | EAU53B/HX | EAU53B/HX | EAU53B/HX |
| | additives | CB bontron N07 | CB bontron N07 | CB bontron N07 | CB bontron N07 | CB bontron N07 | CB bontron N07 |
| | water content | 2.10% | 2.10% | 2.10% | 2.10% | 2.10% | 2.10% |
| | solvent insoluble rate | 87% | 87% | 87% | 87% | 87% | 87% |
| | d(0.5)($\mu$m) | 6 | 20 | 20 | 20 | 20 | 20 |
| | Span | 1.2 | 1 | 1 | 1 | 1 | 1 |
| Particles B | resin | EAU204B/HX | EAU204B/HX | EAU204B/HX | EAU204B/HX | EAU204B/HX | EAU204B/HX |
| | additives | $TiO_2$ bontron E89 | $TiO_2$ bontron E89 | $TiO_2$ bontron E89 | $TiO_2$ bontron E89 | $TiO_2$ bontron E89 | $TiO_2$ bontron E89 |
| | water content | 2.10% | 2.50% | 2.50% | 2.50% | 2.50% | 2.50% |
| | solvent insoluble rate | 87% | 90% | 90% | 90% | 90% | 90% |
| | d(0.5)($\mu$m) | 6 | 20 | 20 | 20 | 20 | 20 |
| | Span | 1.5 | 1 | 1 | 1 | 1 | 1 |
| Substrate propertie | outermost surface | ITO | ITO | ITO | ITO | LF710N/SS20 | LF710N |
| | RA [nm] | 200 | 300 | 500 | 50 | 800 | 20 |
| | Sm [nm] | 500 | 100 | 200 | 50 | 800 | 20 |
| Gas relative humidity used in gap (%RH) | | 40 | 40 | 40 | 40 | 40 | 40 |
| Partition wall | | none | existent | existent | existent | existent | existent |

(continued)

| Display function | | Reference Example 2 | Example 34 | Example 35 | Comparative Example 13 | Example 36 | Comparative Example 14 |
|---|---|---|---|---|---|---|---|
| | minimum drive voltage (V) | 100 | 60 | 40 | 170 | 15 | 50 |
| | initial contrast ratio | 8.60 | 8.8 | 8.7 | 8.8 | 8.5 | 8.8 |
| | contrast ratio after 10000 times (maintaining rate) | 7.24 (84%) | 7.92 (90%) | 7.91 (91%) | 7.74 (88%) | 7.65 (90%) | 7.92 (90%) |
| | contrast ratio after 5days left (maintaining rate) | 6.23 (72%) | 7.48 (95%) | 7.57 (87%) | 7.12 (81%) | 7.31 (86%) | 7.48 (85%) |

INDUSTRIAL APPLICABILITY

According to the first embodiment of the first aspect of the invention, it is possible to introduce a very little uneven electric field partly by the micro-concave portions and/or the micro-convex portions arranged to a surface of the electrode. Since the very little uneven electric field generated by the micro-concave portions and/or the micro-convex portions includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination. As a result, it is possible to improve the image quality deterioration during the durable use.

According to the second embodiment of the first aspect of the invention, normally, an electric field for flying the particles applied from a pair of electrodes provided respectively on the two substrates arranged in parallel with each other is an even electric field. On the other hand, in the image display device according to the invention, it is possible to introduce a very little uneven electric field partly by the micro-cutout holes arranged to a surface of the electrode. Since the very little uneven electric field generated by the micro-cutout holes includes an electric field component along a lateral direction i.e. along a direction parallel to the substrate surface, the particles to be moved in a lateral direction are sucked or cast away aggressively and the particles are fixed. Therefore, it is possible to inhibit an uneven distribution of the particles due to the particle agglutination. As a result, it is possible to improve the image quality deterioration during the durable use.

The image display device according to the first embodiment of the second aspect of the invention, in which particles are sealed between substrates, at least one of the substrates being transparent, and, in which the particles are moved so as to display an image, is characterized in that a surface of the substrate to which the particles are contacted is coated thinly by an insulation member having a volume resistance of not less than $1 \times 10^{12}$ [$\Omega \cdot cm$] so as to provide a thin insulation film. Therefore, the image display device having an inexpensive construction and achieving both an improvement of stability and a decrease of drive voltage can be provided.

In the image display device according to the second embodiment of the second aspect of the invention, it is not necessary to generate a strong electric field when driving and an electric circuit can be assembled by general-purpose electric materials and wherein it is possible to achieve both an improvement of stability and a decrease of drive voltage.

According to the third aspect of the invention, since an image display state is read-out by detecting a fly/move current produced when the particles are flown and moved in a pixel, specifically, the image display state read-out step is performed in such a manner that overall black color image writing or overall white color image writing is performed with respect to the displayed image and a display density of respective pixels is obtained from an integral value of the fly/move current flowing through respective pixels when the image writing step is performed, it is possible to read-out the image display density, and thus an image display device having a rapid response in a dry-type device, a simple and inexpensive construction and an excellent stability, which can read-out an image display state of the displayed image can be obtained.

According to a first aspect of the invention, there is provided an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, characterized in that micro-concave portions and/or micro-convex portions are provided to a part of or an overall of a surface of the electrode.

Preferably, the micro-concave portions and/or the micro-convex portions are constructed in such a manner that the following formulas are satisfied:

$$\text{average width/maximum average particle size} > 2;$$

and

$$\text{average height/maximum average particle size} > 2;$$

where a length across corner of a projection shape of the micro-concave portions and/or the micro-convex portions with respect to an electrode surface is assumed to be the average width, an average absolute value of a depth and/or a height of the micro-concave portions and the micro-convex portions is assumed to be the average height (depth), and a largest average particle size among the two or more groups of particles is assumed to be the maximum average particle size.

Preferably, a plurality of the micro-concave portions and/or the micro-convex portions are provided to the same electrode and an average distance between the portions is constructed to satisfy the formula: average distance/maximum average particle size < 50.

Preferably, an insulation layer is provided to a surface of the electrode and the micro-concave portions and/or the micro-convex portions are provided to the insulation layer.

Preferably, a gross area of the projection shapes of the micro-concave portions and/or the micro-convex portions on the electrode surface is 0.1 - 50 % with respect to an area of the electrode.

According to a second aspect of the present invention, there is provided an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, characterized in that micro-cutout holes are provided to a part of or an overall of a surface of the electrode.

Preferably, the micro-cutout holes are constructed in such a manner that the following formula is satisfied:

$$\text{maximum width/maximum average particle size} > 10;$$

where a largest length across corner of a shape of the micro-cutout holes is assumed to be the maximum width and a largest average particle size among the two or more groups of particles is assumed to be the maximum average particle size.

Preferably, a plurality of the micro-cutout holes are provided to the same electrode and a minimum distance between the holes is constructed to satisfy the following formula:

$$\text{minimum distance/maximum average particle size} < 50.$$

Preferably, a gross area of the micro-cutout holes is 0.1 - 50 % with respect to an area of the electrode.

Preferably, an average particle diameter of the particles is 0.1 to 50 $\mu$m.

Preferably, a surface charge density of the particles measured by a carrier and in accordance with a blow-off method is not less than 5 $\mu$C/m$^2$ and not greater than 150 $\mu$C/m$^2$ in an absolute value.

Preferably, the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the Corona discharge.

Preferably, a color of the particles is a white or a black.

According to a third aspect of the present invention, there is provided an image display device in which particles are sealed between substrates, at least one of the substrates being transparent, and, in which the particles are moved so as to display an image, characterized in that a surface of the substrate to which the particles are contacted is coated thinly by an insulation member having a volume resistance of not less than 1x10$^{12}$ [$\Omega$·cm] so as to provide a thin insulation film.

Preferably, a thickness of the thin insulation film is not more than 5 $\mu$m.

Preferably, the insulation member to be coated on the substrate is the member in which the maximum surface potential, in the case that the surface of the insulation member is charged by a generation of Corona discharge caused by applying a voltage of 8 KV to a Corona discharge device deployed at a distance of 1 mm from the surface, is 300 V or greater at 0.3 second after the Corona discharge.

According to a fourth aspect of the present invention, there is provided an image display device in which particles are sealed between substrates, at least one of the substrates being transparent, and, in which the particles are flown and moved so as to display an image, characterized in that an arithmetic average roughness (Ra) and a concave-convex average distance (Sm) of a surface of the substrate, to which the particles are contacted, satisfy the following formulas (1) and (2):

$$d(0.5)/10 >= Ra >= d(0.5)/200 \qquad (1)$$

$$d(0.5)/10 >= Sm >= d(0.5)/1000 \qquad (2)$$

(here, d(0.5) means a value of the particle size expressed by $\mu$m wherein an amount of the particles having the particle size larger than this value is 50%).

Preferably, the value of d(0.5) is 0.1 - 50 $\mu$m.

Preferably, a space in the device is filled with a gas having a relative humidity at 25°C of not more than 60% RH.

Preferably, a particle size distribution Span of the particle, which is defined by the following formula, is less than 5:

$$Span = (d(0.9) - d(0.1))/d(0.5)$$

(here, d(0.5) means a value of the particle size expressed by $\mu$m wherein an amount of the particles having the particle size larger than or smaller than this value is 50%, d(0.1) means a value of the particle size expressed by $\mu$m wherein an amount of the particles having the particle size smaller than this value is 10%, and d(0.9) means a value of the particle size expressed by $\mu$m wherein an amount of the particles having the particle size smaller than this value is 90%).

Preferably, a solvent insoluble rate of the particles, which is defined by the following formula, is not less than 50%:

$$solvent\ insoluble\ rate\ (\%) = (B/A) \times 100;$$

(here, A is a weight of the particle before being immersed into the solvent and B is a weight of particles after the particles are immersed into good solvent at 25°C for 24 hours).

Preferably, the image display device is formed by a plurality of display cells defined by partition walls.

Preferably, the partition walls is formed by one of a screen-printing method, a sandblast method, a photo-conductor paste method and an additive method.

Preferably, the partition walls have a cantilever structure.

According to a fifth aspect of the present invention, there is provided an image display device which comprises an image display panel, in which two or more groups of particles having different colors and different charge characteristics are sealed between two substrates, at least one of two substrates being transparent, and, in which the particles, to which an electrostatic field produced by a pair of electrodes provided on respective substrates is applied, are made to fly and move so as to display an image, characterized in that an image display state is read-out by detecting a fly/move current produced when the particles are flown and moved in a pixel.

Preferably, the image display state read-out step is performed in such a manner that overall black color image writing or overall white color image writing is performed with respect to the displayed image and a display density of respective pixels is obtained from an integral value of the fly/move current flowing through respective pixels when the image writing.step is performed.

Preferably, further comprising a fly/move current detecting portion for detecting the fly/move current and an integrator for integrating the fly/move current.

Preferably, the fly/move current is detected by utilizing the electrodes used when the image writing step is performed.

Preferably, an image re-writing step is performed on the basis of the read-out image display state.

Preferably, an average particle diameter of the particles is 0.1 - 50 $\mu$m.

Preferably, a surface charge density of the particles measured by a carrier and in accordance with a blow-off method is not less than 5 $\mu$C/m$^2$ and not greater than 150 $\mu$C/m$^2$ in an absolute value.

Preferably, the particles are particles in which the maximum surface potential, in the case that the surface of particles is charged by a generation of Corona discharge caused by applying a voltage of 8 KV to a Corona discharge device deployed at a distance of 1 mm from the surface, is 300 V or greater at 0.3 second after the discharge.

Preferably, a color of the particles is a white or a black.

Preferably, the image display panel comprises a matrix electrode having a plurality of scan electrodes and data electrodes arranged substantially parallel thereto.

**Claims**

1. An image display device in which particles are sealed between substrates, at least one of the substrates being transparent, and, in which the particles are flown and moved so as to display an image, **characterized in that** an arithmetic average roughness (Ra) and a concave-convex average distance (Sm) of a surface of the substrate, to which the particles are contacted, satisfy the following formulas (1) and (2):

$$d(0.5)/10 \geq Ra \geq d(0.5)/200 \qquad (1)$$

$$d(0.5)/10 \geq Sm \geq d(0.5)/1000 \qquad (2)$$

(here, d(0.5) means a value of the particle size expressed by $\mu$m wherein an amount of the particles having the particle size larger than this value is 50%).

2. The image display device according to claim 1, wherein the value of d(0.5) is 0.1 - 50 $\mu$m.

3. The image display device according to one of claims 1 or 2, wherein a space in the device is filled with a gas having a relative humidity at 25°C of not more than 60% RH.

4. The image display device according to one of claims 1 to 3, wherein a particle size distribution Span of the particle, which is defined by the following formula, is less than 5:

$$Span = (d(0.9) - d(0.1))/d(0.5) \; ;$$

(here, d(0.5) means a value of the particle size expressed by $\mu$m wherein an amount of the particles having the particle size larger than or smaller than this value is 50%, d(0.1) means a value of the particle size expressed by $\mu$m wherein an amount of the particles having the particle size smaller than this value is 10%, and d(0.9) means a value of the particle size expressed by $\mu$m wherein an amount of the particles having the particle size smaller than this value is 90%).

5. The image display device according to one of claims 1 to 4, wherein a solvent insoluble rate of the particles, which is defined by the following formula, is not less than 50%:

$$\text{solvent insoluble rate (\%)} = (B/A) \times 100;$$

(here, A is a weight of the particle before being immersed into the solvent and B is a weight of particles after the particles are immersed into good solvent at 25°C for 24 hours).

6. The image display device according to one of claims 1 to 5, wherein the image display device is formed by a plurality of display cells defined by partition walls.

7. The image display device according to claim 6, wherein the partition walls is formed by one of a screen-printing method, a sandblast method, a photo-conductor paste method and an additive method.

8. The image display device according to claim 6, wherein the partition walls have a cantilever structure.

# FIG. 1

(a)

(b)

(c)

# FIG. 2

(a)

(b)

(c)

(d)

(e)

(f)

(g)

(h)

# FIG. 3

# FIG. 4

# FIG. 5

FIG. 6

# FIG. 7

(a)

(b)

(c)

(d)

(e)

(f)

(g)

# FIG. 8

# FIG. 9

# FIG. 10

FIG. 11

FIG. 12

EP 2 299 318 A2

# FIG. 13

# FIG. 14

# FIG. 15

Preparation for prepress

Paste application ~
pressure application

Paste transfer

Paste hardening

Repeating the above steps

# FIG. 16

Paste application

Photo-resist film

Exposure ～ development

Sandblast

Resist film removal

# FIG. 17

Paste application

Photomask preparation

Exposure

Development

Firing

# FIG. 18

Photo-resist film adhesion

Exposure ～ etching

Paste filling ～ hardening

Photo-resist film removal

# FIG. 19

(a)

(b)

(c)

# FIG. 20

(a)

(b)

# FIG. 21

(a)

Applied voltage

B

Particle fly/move
threshold voltage

A

Time

(b)

Observed current

Particle fly/move
current integral value

Time

Charged current for
charging capacitance

Charged current × B/A

# F I G. 22

# FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Japan Hardcopy '99. The Imaging Society of Japan, 21 July 1999, 249-252